# EUROPÄISCHE PATENTSCHRIFT

(11) **EP 2 415 635 B1**
(45) Veröffentlichungstag und Bekanntmachung des Hinweises auf die Patenterteilung: **30.03.2016**
(21) Anmeldenummer: 11006311.2
(22) Anmeldetag: 30.07.2011
(51) Int. Cl.: B60P 1/02, B62D 63/06, B62B 3/04

(54) **Transportwagen für den Transport von fahrbaren Behältern, insbesondere von fahrbaren Entsorgungsbehältern, sowie Verfahren zum staplerfreien Transport und Umschlag von fahrbaren Entsorgungsbehältern**
Transport vehicle for the transport of drivable containers, in particular drivable removal containers, and method for transport and handling of drivable removal containers without the use of fork lift trucks
Chariot de transport pour le transport de récipients mobiles, notamment de récipients d'évacuation mobiles, ainsi que procédé de transport sans chariot élévateur et enveloppe de récipients d'évacuation mobiles

(30) Priorität: 06.08.2010 DE 102010033677
(43) Veröffentlichungstag der Anmeldung: 08.02.2012
(73) Patentinhaber: AUTECO Unternehmens- und Organisationsberatung GmbH, 6370 Reith bei Kitzbühel (AT)
(72) Erfinder: Büchl, Reinhard, 85120 Hepberg (DE)
(74) Vertreter: Liebl, Thomas

(56) Entgegenhaltungen:
- AT-U1- 10 901
- DE-U- 1 846 191
- FR-A1- 2 868 743
- US-A1- 2011 197 416

## Beschreibung

Die Erfindung betrifft einen Transportwagen für den Transport von fahrbaren Behältern, insbesondere von fahrbaren Entsorgungsbehältern, nach dem Oberbegriff des Anspruchs 1. Weiter betrifft die Erfindung ein Verfahren zum staplerfreien Transport und Umschlag von mit Abfällen beladenen oder leeren, fahrbaren Entsorgungsbehältern nach dem Oberbegriff des Anspruchs 14.

Im Bereich von großindustriellen Montage- und Fertigungswerken, wie sie beispielsweise in der Automobilindustrie Verwendung finden, ist der Einsatz von fahrbaren Behältern, wie beispielsweise von fahrbaren Entsorgungsbehältern, allgemein bekannt. Diese Behälter werden regelmäßig in der Nähe von Fertigung- oder Montagearbeitsplätzen von Fertigungs- oder Montagelinien auf- bzw. abgestellt und dienen beispielsweise der Aufnahme von zu entsorgendem Transportgut. Sobald eine bestimmte Befüllmenge der Behälter erreicht ist, werden diese Behälter vom zugeordneten Beladeplatz entfernt und zu einer zentralen Entsorgungsstation verbracht, an der die Behälter entleert werden, bevor diese wieder zum erneuten Beladen in das Werk zurückgebracht werden. Der Transport der Behälter erfolgt regelmäßig im Zug- oder Schleppverband mittels einer Zugmaschine oder einem Zugfahrzeug, das mehrere derartiger zusammengekoppelter Entsorgungsbehälter von den einzelnen Beladestationen abholt und zur zentralen Entsorgungsstation bringt. Da sich die zentralen Entsorgungsstationen regelmäßig außerhalb der jeweiligen Werkshallen befinden, müssen die Entsorgungsbehälter ebenfalls nach außerhalb der Werkshallen verfahren werden, wodurch es insbesondere bei regnerischen oder winterlichen Straßenverhältnissen oder aber auch bei stark verschmutzen Straßenverhältnissen zu einer zum Teil hochgradigen Verschmutzung der Behälterräder bzw. auch der Behälterunterseite kommen kann. Deshalb müssten diese Behälter nach deren Entleerung und vor deren Wiedereinbringen in die Werkshallen gereinigt werden, um die erforderliche Sauberkeit der Werkshallen zu gewährleisten und keinen unerwünschten Schmutz von außerhalb der Werkshallen in die Werkshallen einzubringen. Diese Reinigungsarbeiten sind sehr zeit- und personalintensiv und damit auch entsprechend teuer, so dass diese nicht durchgeführt werden, was somit zu einer entsprechenden Verschmutzung des reinzuhaltenden, sogenannten Weißbereiches der Werkshallen führt.

Um dies zu vermeiden ist es weiter bekannt, die im Weißbereich bzw. Reinraumbereich der Werkshallen befüllten Entsorgungsbehälter zu einem als Graubereich bezeichneten Umschlagplatz zu transportieren, wo sie durch den Einsatz von Gabelstaplern auf Transportwägen gehievt werden, die anschließend mittels einer Zugmaschine vom Graubereich weg nach außerhalb der Werkshallen im sogenannten verschmutzten Schwarzbereich zu der Entsorgungsstation transportiert werden. An der schwarzbereichseitigen Entsorgungsstation stehen dann ebenfalls wieder Stapler bereit, die die Behälter zu einer Hub- und Kippvorrichtung der Entsorgungsstation transportieren, wo die Behälter entleert werden. Nach dem Entleeren der Behälter werden die Behälter wiederum durch Staplereinsatz auf die Transportwägen gehievt und vom Schwarzbereich in den als Umschlagplatz fungierenden Graubereich der Werkshallen verfahren. Dort werden die entleerten Behälter dann wiederum durch den Einsatz von Gabelstaplern von den Transportwägen herunter gehievt und anschließend vom Graubereich aus wieder zum Befüllen an die jeweilige Beladestation im Weißbereich der Werkshallen verfahren.

Ersichtlich handelt es sich hier um eine äußerst aufwändige Entsorgungslogistik, wobei insbesondere der Staplerverkehr in den Werkshallen sowie auch im Bereich der Entsorgungsstation ein wesentliches Problem darstellt.

Aus dem Bereich der Versorgung von Fertigungs- bzw. Montagelinien von großindustriellen Serienfertigungen sind bereits Trailerzuganhänger für sogenannten Routenzüge bekannt, so zum Beispiel aus der DE 20 2009 001 933 U1, bei denen ein Trailerzuganhänger einen rollengeführten, in Draufsicht C-förmigen Tragrahmen mit einem vorderen und einem hinteren Fahrwerk aufweist, der aus einem seitlichen Längsträger und zwei rechtwinklig davon abstehenden Querträgern aufgebaut ist und der auf der dem Längsträger gegenüberliegenden Seite eine Ladeöffnung für einen Laderaum aufweist, in der parallel zu den Querträgern verlaufende Hubzinken zur Aufnahme von in die Ladeöffnung quer zur Fahrtrichtung ein- und ausschiebbaren Transportwägen angeordnet werden können. Der die Hubzinken tragende Tragrahmen ist dabei über Huborgane am vorderen und am hinteren Fahrwerk abgestützt. Bei einer Betätigung der Huborgane kann der gesamte Tragrahmen mitsamt den Hubzinken sowie dem darauf positionierten Transportwagen angehoben werden, so dass die Räder bzw. Laufrollen der Transportwägen nicht mehr selbst auf der Fahrbahn abrollen können. Die Huborgane werden über eine gemeinsame Pneumatik- oder Hydraulikansteuerung vom Zugfahrzeug aus angesteuert.

Ein vom Prinzip her ähnlicher Aufbau ist auch aus der DE 203 13 955 U1 bekannt, bei der allerdings nicht der Tragrahmen selbst angehoben wird, sondern lediglich die gabelartigen Hubzinken angehoben werden, um die Räder bzw. Transportrollen des Transportwagens von der Fahrbahn abzuheben. Ein zur DE 203 13 955 U1 ähnlicher Aufbau ist ferner auch aus der DE 199 40 899 A1 bekannt.

Mit derartigen im Bereich der Versorgung von Fertigungs- bzw. Montagelinien eingesetzten Transportwägen soll der innerbetriebliche Gabelstaplerverkehr stark vermindert werden, um eine möglichst staplerfreie Versorgung der Fertigungs- bzw. Montagelinien zu erzielen. Derartige vorbeschriebene Transportwägen sind jedoch für den Einsatz im Entsorgungsbereich nicht geeignet, da diese bei Fahrten außerhalb der Werks- bzw. Fertigungshallen und bei entsprechenden Straßenverhältnissen immer noch im Bereich ihrer Räder und ihrer Behälterunterseite durch zum Beispiel Spritzwasser oder dergleichen stark verunreinigt werden würden.

Ein weiterer wesentlicher Nachteil derartiger Hubzinkenlösungen besteht darin, dass die Hubzinken jeweils genau an die Unterseite eines Behälters bzw. andersherum die Behälterunterseiten an die Hubzinken angepasst sein müssen, um einen einwandfreien, funktionssicheren Transport der Behälter sicherzustellen. Das heißt somit mit anderen Worten, dass nur eine beschränkte Anzahl von genau auf die jeweiligen Zinkenmaße abgestimmten Behälter für den Einsatz in den jeweiligen Transportwägen geeignet ist, was zu einem logistischen und bauteiltechnischen Aufwand in Verbindung mit unterschiedlichen Behälterlösungen führt.

Aus der DE 1 846 191 A ist eine Entladevorrichtung an einem Lastfahrzeug bekannt, bei dem am Fahrzeugrahmen ein Hebel gelagert ist, der den Träger des Aufnehmers für eine Last bildet. Der Aufnehmer besteht aus einem muldenförmigen Gestänge, mittels dem zylindrische Gegenstände, etwa Fässer oder Papierrollen, abgeladen werden können. Mit dem Hebel ist in einem Gelenk ein Kolben eines hydraulischen Antriebes verbunden, dessen Zylinder schwenkbar auf dem Rahmen gelagert ist. Der Antrieb dient dazu, den Hebel bei unbelastetem Aufnehmer in die obere Endstellung zu bringen, in der er von der Ladefläche des Fahrzeugs aus beladen werden kann. Unter dem Eigengewicht der Last sinkt dann der Aufnehmer unter Überwindung der vom Antrieb ausgeübten Kraft in die untere Endstellung, in der er entladen wird.

Weiter ist aus der FR 2 868 743 A1 eine fahrbare Entladevorrichtung für Container bekannt, bei der ein Hub- und Schwenkmechanismus so aus einem Transportwagen ausgefahren und abgesenkt werden kann, dass ein fahrbarer Behälter aufgefahren und anschließend nach Anheben der Hubplatte wieder in den Transportwagen eingefahren werden kann (Fig. 38 bis 41).

Demgegenüber ist es Aufgabe der vorliegenden Erfindung, einen Transportwagen für den Transport von fahrbaren Behältern, insbesondere von fahrbaren Entsorgungsbehältern, zur Verfügung zu stellen, mittels dem insbesondere im Rahmen einer großindustriellen Entsorgungslogistik eine Verschmutzung der Behälterunterseite auf einfache und zuverlässige Weise mit einer hohen Funktionssicherheit vermieden werden kann und/oder mittels dem ein Beladen des Transportwagens mit fahrbaren Behältern bzw. der Transport der fahrbaren Behälter auf einfache und zuverlässige Art und Weise mit hoher Funktionssicherheit erfolgen kann.

Diese Aufgabe wird gelöst mit den Merkmalen der unabhängigen Ansprüche. Vorteilhafte Ausgestaltungen hierzu sind jeweils Gegenstand der darauf rückbezogenen Unteransprüche.

Mit einem derartigen erfindungsgemäßen Hub- und Schwenkmechanismus, der gleichzeitig auch als Zwangsführungseinrichtung dient, um das Hubelement beim Anheben bzw. Absenken in eine Richtung zum Stauräum hin aufzuschwenken bzw. von diesem wegzuschwenken, kann zum einen ein Beladen des Transportwagens mit fahrbaren Behältern bzw. zum anderen auch der Transport der fahrbaren Behälter auf einfache und zuverlässige Art und Weise mit hoher Funktionssicherheit erfolgen. Denn dadurch, dass das Hubelement mittels des Hub- und Schwenkmechanismus in der angehobenen Position so zwangsgeführt gegen die parallel zur Fahrbahn als Transportwagen-Aufstandsfläche verlaufende Horizontalebene in Richtung zum Stauraum hin aufgeschwenkt ist, wird sichergestellt, dass auf den wenigstens einen Behälter im Stauraum eine diesen in Stauraum-Einfahrrichtung beaufschlagende bzw. "vorspannende" Kraftkomponente wirkt, die im Sinne einer Hangabtriebskraft einer schiefen bzw. geneigten Ebene während des Transports sicherstellt, dass die jeweils im Stauraum aufgenommenen Behälter zuverlässig und funktionssicher im Stauraum des Transportwagens gehalten werden. Gegebenenfalls zusätzlich vorhandene Sicherungsmittel zur Fixierung der im Stauraum des Transportwagens aufgenommenen fahrbaren Behälter können dadurch weniger aufwändig ausgelegt sein sowie gegebenenfalls ganz entfallen. Andererseits ist mit der erfindungsgemäßen Lösung sichergestellt, dass das Hubelement mittels des Hub- und Schwenkmechanismus in der abgesenkten Position so zwangsgeführt in Richtung vom Stauraum weg gegen die Horizontalebene abgeschwenkt oder abgekippt ist, dass ein vorderer, ladeöffnungsseitiger Randbereich des Hubelementes auf der Fahrbahn aufliegt und/oder das Hubelement damit in dieser abgesenkten Position bzw. in dieser abgesenkten Beladeposition eine einfach zu befahrene Auffahrrampe für die fahrbaren Behälter ausbildet. Damit kann das Beladen des wenigstens einen tragrahmenseitigen Stauraums auf einfache Weise mit wenig Kraftaufwand schnell und funktionssicher sowie vor allem ohne Stapler oder dergleichen Hilfsmittel durchgeführt werden. Ein besonderer Vorteil des Absenk-Abschwenkes liegt auch darin, dass dadurch stets sichergestellt ist, auch bei Bodenunebenheiten, dass die vordere Ladekante des Hubelementes, die bevorzugt durch eine zuvor beschriebene Hubplatte, aber alternativ auch durch einen oder mehrere Hubzinken gebildet sein kann, stets am Boden bzw. auf der Fahrbahn zur Auflage kommt und dadurch ein Befahren des Hubelementes, insbesondere einer Hubplatte, auf einfache Weise ohne Staplereinsatz sichergestellt ist. Beim lediglich parallel zur Fahrbahn durchgeführten Absenken des Hubelementes besteht nämlich die Gefahr, dass dieses durch Bodenunebenheiten so mit der Ladekante vom Boden abgehoben ist, dass ein Befahren nicht möglich ist und der Behälter gegebenenfalls mit einem Stapler auf den Transportwagen gehoben werden muss.

Gemäß einer bevorzugten konkreten Ausgestaltung wird vorgeschlagen, dass der Hub- und Schwenkmechanismus wenigstens einen an wenigstens einer Halteelementseite angreifenden Hub- und Schwenkarm aufweist, der einerseits unmittelbar oder mittelbar am Tragrahmen schwenkbar angelenkt ist und der zum anderen unmittelbar oder mittelbar an dem Hubelement an mehreren voneinander beabstandeten Angriffspunkten schwenkbar angelenkt ist. Gemäß einer besonders bevorzugten Ausgestaltung hierzu wird vorgeschlagen, jeweils wenigstens einen auf zwei gegenüberliegenden Halteelementseiten angreifenden Hub- und Schwenkarm vorzusehen, wobei die zwei gegenüberliegenden Halteelementseiten bevorzugt in einer Querrichtung, bezogen auf die Behälter-Einfahrrichtung in den Stauraum, einander gegenüberliegend ausgebildet sind. Der wenigstens eine Hub- und Schwenkarm oder wenigstens einer der Hub- und Schwenkarme im Falle von mehreren Hub- und Schwenkarmen ist mit einer Verstelleinrichtung, vorzugsweise einer am Tragrahmen gehalterten bzw. dort schwenkbar gelagerten Verstelleinrichtung, dergestalt gekoppelt, dass der Hub- und Schwenkarm bei einer Betätigung der Verstelleinrichtung je nach Verstellrichtung angehoben oder abgesenkt wird, wobei die hubplattenseitigen Angriffspunkte des wenigstens einen Hub- und Schwenkarm so zueinander beabstandet und/oder versetzt sind, dass das Hubelement bei einer Schwenkverlagerung des wenigstens einen Hub- und Schwenkarms oder wenigstens eines der Hub- und Schwenkarme, je nach Verlagerungsrichtung, angehoben oder abgesenkt sowie gleichzeitig zwangsgeführt in die entsprechende Neigung gegenüber der Horizontalebene auf- bzw. abgekippt wird. Mit einer derartigen konkreten Ausgestaltung des Hub- und Schwenkmechanismus mit wenigstens einem Hub- und Schwenkarm lässt sich bei einer Betätigung der Hubvorrichtung die Verlagerung des Hubelementes sowie deren zwangsgeführte Verschwenkung auf stabile und funktionssichere Weise realisieren, wobei zudem der bauliche Aufwand zur Umsetzung eines derartigen Hub- und Schwenkmechanismus mit wenigstens einem Hub- und Schwenkarm relativ unaufwändig mit standardisierten Bauteilen durchgeführt werden kann.

Grundsätzlich könnte zur Verschwenkung ein einziger Hub- und Schwenkarm vorgesehen sein, der mittels der Verstelleinrichtung verschwenkt wird und der weiter im Bereich seiner hubelementseitigen Angriffspunkte so aufgezweigt bzw. aufgegabelt ist, dass das Halteelement in der angehobenen bzw. abgesenkten Position die entsprechende Neigung gegen die Horizontalebene aufweist. Bevorzugt ist jedoch im Hinblick auf eine stabile und funktionssichere sowie kinematisch relativ einfach beherrschbare Ausgestaltung des Hub- und Schwenkmechanismus vorgesehene, dass dieser mehrere, insbesondere zwei separate und an wenigstens einer Halteelementseite angreifende Hub- und Schwenkarme aufweist. Auch hier ist wiederum im Hinblick auf eine optimierte und krafteinleitungstechnisch günstige Hub- und Schwenkbewegung vorgesehen, dass jeweils wenigstens zwei auf zwei gegenüberliegenden Halteelementseiten angreifende Hub- und Schwenkarme vorgesehen sind. Die vorzugsweise parallel oder windschief zueinander verlaufenden Hub- und Schwenkarme sind zum einen beabstandet voneinander an den Hubelementen und zum anderen am Tragrahmen schwenkbar angelenkt, wobei hier, im Sinne der zuvor gemachten Ausführungen nicht unbedingt vorgesehen sein muss, dass die tragrahmenseitigen Angriffspunkte der Hub- und Schwenkarme voneinander beabstandet sind. Vielmehr kann hier bei einer entsprechenden kinematischen Auslegung der Hub- und Schwenkarme auch ohne weiteres vorgesehen sein, dass diese an einer gemeinsamen tragrahmenbereichsseitigen Schwenkachse angelenkt und um diese verschwenkbar sind. In Verbindung mit dieser bevorzugten konkreten Ausgestaltung kann dann vorgesehen sein, dass an einem ersten Hub- und Schwenkarm, vorzugsweise an einem eine in Hochachsenrichtung gesehen oberen Hub- und Schwenkarm, die Verstelleinrichtung angreift, mittels der der erste Hub- und Schwenkarm um eine tragrahmenbereichsseitige Schwenkachse nach oben oder nach unten schwenkbar ist, wodurch das Hubelement angehoben oder abgesenkt wird, während ein zweiter, vorzugsweise in Hochachsenrichtung unterer Hub- und Schwenkarm so versetzt zum ersten Hub- und Schwenkarm an dem Hubelement angebunden ist, dass das Hubelement bei einer Schwenkverlagerung des ersten Hub- und Schwenkarms vom zweiten Hub- und Schwenkarm zwangsgeführt in die je nach Verlagerungsrichtung auf- oder abgekippte Position überführbar ist.

Gemäß einer weiteren bevorzugten konkreten Ausgestaltung ist vorgesehen, dass der Hub- und Schwenkmechanismus wenigstens ein fest mit dem Tragrahmen, insbesondere mit einem in Fahrtrichtung des Transportwagens verlaufenden Längsträger des Tragrahmens, verbundenes Befestigungselement aufweist, an dem der wenigstens eine das Hubelement tragende Hub- und Schwenkarm schwenkbar angelenkt ist. Mit einem derartigen Befestigungselement ergibt sich eine besonders einfache und stabile Festlegungsmöglichkeit der gesamten Hubvorrichtung am Tragrahmen, wobei bevorzugt vorgesehen ist, dass das wenigstens eine Befestigungselement als Befestigungswinkel ausgebildet ist, der bezogen auf die Hochachsenrichtung von oben her auf den Tragrahmen aufgesetzt ist und/oder der den Tragrahmen in einer flächen Anlageverbindung wenigstens bereichsweise umgreift. Mit einem derartigen Befestigungswinkel ergibt sich eine besonders vorteilhafte Krafteinleitung in den Tragrahmen bei mit den Behältern beladenen Transportwägen.

In diesem Zusammenhang ist es weiter besonders vorteilhaft, dass an gegenüberliegenden Halteelementseiten jeweils ein Befestigungswinkel angeordnet ist, an deren sich in Hochachsenrichtung von oben her am Tragrahmen abstützendem Schenkel eine Schwenkachse gelagert ist, an der auf beiden Seiten des Halteelements jeweils der erste Hub- und Schwenkarm schwenkbar gelagert ist und an deren nach unten in den Stauraum einragendem Schenkel jeweils der zweite Hub- und Schwenkarm schwenkbar gelagert ist. Mit einem derartigen Aufbau, bei dem die Hub- und Schwenkarme an dem Befestigungselement bzw. dem Befestigungswinkel angeordnet sind, lässt sich auf einfache Weise eine funktionssichere und stabile sowie einfach zu bewerkstelligende Anbindung der Hub- und Schwenkarme und damit der Hubvorrichtung an dem Tragrahmen bewerkstelligen.

Gemäß einer weiteren bevorzugten Ausgestaltung der vorliegenden Erfindungsidee kann vorgesehen sein, dass die Verstelleinrichtung einerseits am Tragrahmen, insbesondere an einem quer zur Fahrtrichtung verlaufenden Querträger des Tragrahmens gelagert, insbesondere schwenkbar angelenkt ist, während andererseits die Verstelleinrichtung weiter am ersten Hub- und Schwenkarm, insbesondere im Bereich dessen hubelementseitigen Anlenkpunktes, angreift bzw. schwenkbar angelenkt ist. Damit ergeben sich günstige Hebelverhältnisse mit relativ geringem Kraftaufwand für ein Absenken und Anheben des Hubelementes.

Die Betätigung der Hubrichtung selbst kann mit jedem geeigneten Arbeitsmedium bzw. mit jedem geeigneten Energiespeicher erfolgen. Bevorzugt wird die Hubvorrichtung als hydraulisch und/oder pneumatisch und/oder elektrisch betätigbare Hubvorrichtung ausgebildet. In diesem Zusammenhang kann dann die Verstelleinrichtung durch eine hydraulisch oder pneumatisch betätigbare ZylinderKolben-Einheit oder durch einen elektrisch betätigbaren Aktuator gebildet sein, die oder der je nach Arbeitsmedium oder Energiequelle mit einer oder mehreren von einer Betätigungseinrichtung der Verstelleinrichtung ausgehenden Versorgungsleitung(en) gekoppelt ist. Beispielsweise ist in Verbindung mit einer hydraulisch oder pneumatisch betätigbaren Verstelleinrichtung jeweils eine Zuführleitung und eine Abführleitung für das Medium vorgesehen. In Verbindung mit einem elektrisch betätigbaren Aktuator kann eine Energieleitung zur Stromversorgung ausreichend sein. Mit einer derartig hydraulisch oder pneumatisch bzw. auch elektrisch betätigbaren Hubvorrichtung kann das Absenken und Anheben des Hubelements der Hubvorrichtung auf einfache und kraftsparende Weise erfolgen. Grundsätzlich besteht jedoch selbstverständlich auch die Möglichkeit, die Hubvorrichtung als rein manuell bedienbare Hubvorrichtung ohne Fremdenergie bzw. ohne Arbeitsmedium zum Beispiel dergestalt auszulegen, dass das Anheben und Absenken bzw. auch das gegebenenfalls vorgesehene zwangsgeführte Verschwenken rein mechanisch durch zum Beispiel Betätigung eines Spindeltriebs oder dergleichen mit einer Handkurbel erfolgt.

In Verbindung mit hydraulisch oder pneumatisch bzw. elektrisch betätigbarer Hubvorrichtung bzw. Verstelleinrichtung ist es von besonderem Vorteil, dass die wenigstens eine Versorgungsleitung entlang des Tragrahmens geführt und dort gehaltert ist. Alternativ oder zusätzlich dazu kann aber auch vorgesehen sein, dass die Bauteile des Schwenk- und Hubmechanismus, wie beispielsweise die Befestigungswinkel und/oder eine Schwenkachse dazu verwendet wird, um die wenigstens eine Versorgungsleitung durch diese hindurchzuführen, so dass diese in einer Doppelfunktion neben ihrer angestammten Funktion in Verbindung mit der Hubvorrichtung auch zur Führung oder Halterung der wenigstens einen Versorgungsleitung dienen.

In diesem Zusammenhang wird auf einen weiteren wesentlichen Erfindungsaspekt der vorliegenden Erfindungsidee hingewiesen, gemäß dem eine zur Betätigung der Hubvorrichtung vorgesehene Betätigungseinrichtung ebenfalls am bzw. im Bereich des Tragrahmens und/oder der Hubvorrichtung selbst und/oder einer mit dem Tragrahmen und/oder der Hubvorrichtung gekoppelten Baueinheit angeordnet ist, da dadurch eine autark und unabhängig von einer Zugmaschine erfolgende Betätigung der Hubvorrichtung ermöglicht wird, so dass der Transport eine unabhängig von einer Zugmaschine bedienbare und/oder verfahrbare und/oder bestückbare Einheit ausbildet. Damit ergeben sich erhebliche logistische Freiheitsgrade in Verbindung mit zum Beispiel Entsorgungsdienstleistungen. Grundsätzlich wäre jedoch auch die Betätigung von der Zugmaschine aus auch mit den erfindungsgemäßen Transportwagenlösungen möglich.

Die Betätigungseinrichtung selbst weist bevorzugt wenigstens einen Bedienhebel, insbesondere wenigstens einen Schwenkhebel, auf, bei dessen Betätigung als Pumphebel die Zylinder-Kolben-Einheit zum Anheben des Hubelementes ausfahrbar und bei dessen Betätigung als Ablasshebel die Zylinder-Kolben-Einheit zum Absenken des Hubelementes einfahrbar ist. Das Gleiche gilt analog und im übertragenen Sinne für sämtliche Baueinheiten, die ein Äquivalent zur Zylinder-Kolben-Einheit ausbilden. Darüberhinaus kann zum Beispiel vorgesehen sein, dass ein einziger Bedienhebel vorgesehen ist, der je nach zum Beispiel Schaltstellung eines Schaltventils zum Einen als Pumphebel und zum Anderen als Ablasshebel dient. Genauso gut können aber auch zwei separate Hebel vorgesehen sein, von denen der eine als Pumphebel und der andere als Ablasshebel dient. Des Weiteren muss ein derartiger Bedienhebel nicht zwingend als Schwenkhebel ausgeführt sein. Auch andere Verlagerungsmöglichkeiten, zum Beispiel lineare Verlagerungsmöglichkeiten in Verbindung mit einem Zug- oder Druckelement bzw. in Verbindung mit einen Hub- oder Absenkelement sind grundsätzlich jederzeit möglich und sollen ausdrücklich mit vom Schutzumfang umfasst sein, wenn diesen eine gleichwertige technische Funktion und Wirkungsweise zukommt.

Gemäß einer weiteren besonders bevorzugten erfindungsgemäßen Ausgestaltung, die auch separat und unabhängig in Alleinstellung beansprucht wird, ist vorgesehen, dass die Hubvorrichtung mit einer Hub- und/oder Absacksicherung gekoppelt ist. Eine derartige Hub- bzw. Absacksicherung ist bevorzugt dergestalt ausgebildet, dass ein hubelementseitiges Rastelement während eines Absenkens des Hubelementes außer Eingriff mit einem tragrahmenbereichseitigen Rastgegenelement bringbar ist und mittels der das Halteelement in wenigstens einer definierten angehobenen Position lösbar gehaltert ist. Mittels einer derartigen Hub- und/oder Absacksicherung kann auf einfache Weise sichergestellt werden, dass die Verlagerung funktionssicher erfolgt, wobei das Hubelement auch im Versagensfalle der Betätigungs- bzw. Verstelleinrichtung nicht nach unten absackt, sondern in einer definierten Position gehalten werden kann, so dass hierdurch ein erhöhter Unfallschutz bereitgestellt wird, was nachfolgend noch näher erläutert wird.

Gemäß einer besonders bevorzugten konkreten Ausgestaltung hierzu kann vorgesehen sein, dass das tragrahmenbereichseitige Rastgegenelement mit einem Koppelelement, zum Beispiel mit einem Federelement als Kraftspeicher oder dergleichen, gekoppelt ist, das das tragrahmeribereichseitige Rastgegenelement bei einer Betätigung der Hubvorrichtung, insbesondere bei einer Verlagerung bzw. Verschwenkung wenigstens einen Bedienhebels oder wenigstens eines der Bedienhebel der Betätigungseinrichtung entlang eines definierten Verlagerungs- bzw. Schwenkweges, dauerhaft außer Eingriff mit dem hubelementseitigen Rastelement bringt bzw. hält. In diesem Zusammenhang ist es gemäß einer besonders bevorzugen Ausgestaltung vorteilhaft, dass das Koppelelement bzw. die Hubvorrichtung mitsamt Betätigungseinrichtung so ausgelegt und/oder angeordnet ist bzw. sind, dass das Koppelelement das tragrahmenbereichseitige Rastgegenelement bei einem Defekt der Verstelleinrichtung und/oder der Betätigungseinrichtung und/oder der Hubvorrichtung in Eingriff mit dem hubelementseitigen Rastelement hält. Dies kann zum Beispiel insbesondere dann der Fall sein, wenn im Falle einer hydraulischen oder pneumatischen Hubvorrichtung, zum Beispiel aufgrund einer Undichtigkeit oder dergleichen, Arbeitsmedium ausgelaufen ist und nicht mehr in genügendem Maße zur Verfügung steht. Wird dann zum Beispiel der Bedienhebel, zum Beispiel ein Ablasshebel verschwenkt, so reicht zum Beispiel der Hydraulikdruck nicht mehr aus, um das tragrahmenbereichseitige Rastgegenelement mittels des Koppelelementes außer Eingriff mit dem hubelementseitigen Rastelement zu bringen. Ein Absacken ist dadurch wirkungsvoll verhindert. Beispielsweise kann hier bei einer äußerst funktionssicheren Umsetzung konkret vorgesehen sein, dass das tragrahmenbereichseitige Rastgegenelement wenigstens eine Anlaufschräge pro rastgegenelementseitigem Rasthaken aufweist, entlang der ein Rastbolzen des Hubelementes bei einem Anheben des Hubelementes mittels der Betätigungseinrichtung in seine Rastposition am Rasthaken gleitet, vorzugsweise unter Verlagerung des tragrahmenbereichseitigen Rastgegenelementes entlang nach oben geleitet. Das tragrahmenbereichseitige Rastgegenelement kann hierbei zum Beispiel eine sägezahnartige Kontur mit mehreren Rasthaken aufweisen, die jeweils eine Anlaufschräge aufweisen, entlang der ein Rastbolzen des Hubelementes als Bestandteil des hubelementseitigen Rastelementes bei einem Anheben des Hubelementes durch entsprechende Betätigung der Betätigungseinrichtung der Hubvorrichtung in seine vom Rasthaken gefangene Rastposition gleitet. Während dieses Gleitens erfolgt dabei vorzugsweise eine Verlagerung des tragrahmenbereichseitigen Rastgegenelementes, zum Beispiel auch entgegen die Kraft eines Federelementes als Koppelelement. Hierzu ist das tragrahmenbereichseitige Rastgegenelement bevorzugt verschwenkbar am Tragrahmen bzw. im Bereich des Tragrahmens gelagert.

Um bei einer Betätigung der Betätigungseinrichtung das tragrahmenbereichseitige Rastgegenelement mittels des Koppelelementes funktionssicher außer Eingriff mit dem hubelementseitigen Rastelement während des Absenkens des Hubelementes zu halten, kann aber beispielsweise auch ein Bowdenzug als Koppelelement eingesetzt werden, um nur ein weiteres Beispiel zu nennen.

Wie bereits zuvor ausgeführt, ist die gesamte Hubvorrichtung bevorzugt als separates Einbau- und/oder Montagemodul ausgebildet und als solches am Tragrahmen des Transportwagens montiert und/oder fixiert, wobei jeweils eine Hubvorrichtung pro am Tragrahmen vorgesehenen Laderaum vorgesehen ist. Ein derartiges Hubvorrichtungsmodul kann auf einfache Weise vorgefertigt werden und grundsätzlich in beliebigen Tragrahmen als Nachrüstteil eingesetzt werden, zum Beispiel auch anstelle einer vorhandenen und weniger gut funktionsfähigen Hubvorrichtung verwendet und eingesetzt werden.

Grundsätzlich kann der Tragrahmen so ausgestattet und ausgebildet sein, dass dieser lediglich einen Stauraum für einen einzigen fahrbaren Behälter ausbildet. Bevorzugt ist jedoch ein Aufbau eines Tragrahmens mit mehreren separaten tragrahmenseitigen Laderäumen, da dann mit einem einzelnen Transportwagen mehrere fahrbare Behälter gleichzeitig transportiert werden können.

In Verbindung mit mehreren separaten tragrahmenseitigen Laderäumen kann des Weiteren vorgesehen sein, dass jedem der Laderäume eine separate Betätigungseinrichtung zur Betätigung des jeweiligen Hubelementes zugeordnet ist. Besonders bevorzugt ist jedoch ein Aufbau, bei dem bei mehreren separaten tragrahmenseitigen Laderäumen eine Betätigungseinrichtung zur Betätigung von mehreren Hubelementen in unterschiedlichen Laderäumen vorgesehen ist, da dadurch der bauliche Aufwand, insbesondere in Verbindung mit zum Beispiel mit einem Arbeitsmedium betreibbaren Betätigungs- und Verstelleinrichtungen reduziert werden kann. In diesem Fall ist aber dann bevorzugt vorgesehen, dass die Betätigungseinrichtung ein Schaltventil aufweist, mittels dem die Hubelementbetätigung in den unterschiedlichen Laderäumen unabhängig voneinander durchführbar ist, wenngleich selbstverständlich auch eine gleichzeitige Betätigung grundsätzlich möglich ist.

Gemäß einer weiteren Ausgestaltung kann der Tragrahmen auf einer Wagenseite lediglich einen, quer zur Fahrtrichtung des Transportwagens hin offenen Laderaum aufweisen, insbesondere mehrere auf einer Wagenseite quer zur Fahrtrichtung des Transportwagens offene Laderäume aufweisen. Alternativ oder zusätzlich dazu kann auch vorgesehen sein, dass der Tragrahmen auf in Fahrtrichtung des Transportwagens gegenüberliegenden Wagenseiten jeweils wenigstens einen Laderaum aufweist, so dass ein derartiger Tragrahmen bzw. Transportwagen quer zur Fahrtrichtung von unterschiedlichen Seiten her bestückt und beladen werden kann.

Gemäß einem weiteren erfindungsgemäßen Aspekt wird ein Transportwagen für den Transport von fahrbaren Behältern, insbesondere von fahrbaren Entsorgungsbehältern, vorgeschlagen, mit einem fahrbaren Tragrahmen, der an wenigstens einer Seite einen über eine Ladeöffnung zugänglichen Behälter-Stauraum aufweist, wobei wenigstens eine am Tragrahmen angeordnete Hubvorrichtung vorgesehen ist, die wenigstens ein innerhalb des Stauraums angeordnetes Hubelement aufweist, mittels dem ein Behälter relativ zur Fahrbahn absenkbar und anhebbar ist. Erfindungsgemäß ist vorgesehen, dass das Hubelement durch wenigstens eine mit dem zu transportierenden Behälter befahrbare ein- oder mehrteilige Hubplatte gebildet ist, die wenigstens die Räder des Behälters nach unten zur Fahrbahn hin abschirmt.

Mit einer derartigen erfindungsgemäßen Lösung wird, insbesondere in Verbindung mit dem Einsatz im Entsorgungsbereich, eine Verschmutzung von wenigstens den Rädern des zu transportierenden Behälters zuverlässig vermieden, so dass die Behälter, insbesondere die Entsorgungsbehälter, unmittelbar nach deren Entleeren außerhalb der jeweiligen Werks- bzw. Fertigungshallen unverschmutzt in die Werks- bzw. Fertigungshallen eingebracht werden können. Es versteht sich, dass die Transportwägen zudem mit einem den wenigstens einen Behälter von oben und/oder von der Seite her abschirmenden und gegebenenfalls die Laderaumöffnung freigebenden Abdeckelement, zum Beispiel einer an einem gestell- oder strebenartigen Tragrahmen oder einer sonstigen Haltekonstruktion gehalterten Abdeckplane versehen sein kann. Ein derartiges Halteelement kann einfach am Tragrahmen befestigt werden und dann zum Beispiel mit der Abdeckplane behängt oder bestückt werden. Ein derartiges am Tragrahmen befestigtes Abdeckelement sorgt somit auch für einen Schutz gegen Verschmutzung des Behälters von oben und/oder von der Seite her.

Dadurch, dass das Hubelement durch eine befahrbare ein- oder mehrteilige Hubplatte ausgebildet ist, ergibt sich zudem eine wesentliche Freiheit bei der Wahl der Behälter, da diese, anders als dies bei den Hubzinken-Lösungen des Standes der Technik der Fall ist, keine jeweils gleiche, definierte Behälterunterseite, an der die Hubzinken angreifen können, benötigen; vielmehr können mit der erfindungsgemäßen, befahrbaren Halteplatten-Lösung beliebig geformte und ausgestaltete Behälter, insbesondere Behälterunterseiten, verwendet werden, da diese nicht mehr zum Angriff von Halte- und Transportmitteln, wie dies die Gabelzinken sind, benötigt werden.

Gemäß einer besonders bevorzugten konkreten Ausgestaltung wird weiter vorgeschlagen, dass die Hubplatte durch mehrere separate und voneinander beabstandete wannen- und/oder schienenartige Hubplattenschienenelemente gebildet ist, die mittels einem zwischen den Hubplattenschienenelementen verlaufenden Strebenverbund oder mittels zwischen den Hubplattenschienenelementen verlaufender Streben mittelbar miteinander und/oder zu einem stabilen Hubplattenrahmen verbunden sind, wodurch sich ein insgesamt stabiler Aufbau der Hubvorrichtung im Bereich der Hubplatte ergibt, die höchsten Belastungen durch schwere Behälter standhält.

Alternativ oder zusätzlich dazu ist gemäß einer weiteren besonders bevorzugten Ausgestaltung vorgesehen, dass die Hubplattenschienenelemente mit einem dem Tragrahmen zugewandten Seitenwandbereich von der Hubplattenebene nach oben in Hochachsenrichtung wegragen und zur Befestigung und/oder zur Anlenkung von Bauteilen der Hubvorrichtung, insbesondere von Bauteilen, wie zum Beispiel wenigstens eines Hub- und Schwenkarms eines Hub- und Schwenkmechanismus der Hubvorrichtung zum Anheben bzw. Absenken der Hubplatte, dienen. Ein derartiger Hub- und Schwenkmechanismus wird nachfolgend noch näher beschrieben. Mit einer derartigen hochintegrativen Lösung lässt sich der Bauteilaufwand zur Realisierung der Hubvorrichtung vorteilhaft reduzieren, da gleichzeitig Bestandteile der Hubplattenschienenelemente zur Anbringung von Bauteilen der Hubvorrichtung selbst dienen.

Besonders bevorzugt ist eine konstruktive Ausgestaltung, bei der eine bezogen auf die Ladeöffnung im hinteren Stauraumbereich verlaufende Strebe als Wandelement ausgebildet ist, an dem ein dem Tragrahmen zugewandter Seitenwandbereich der Hubplattenschienenelemente und/oder die hinteren stauraumseitigen Endbereiche der Hubplattenschienenelemente angrenzen und/oder angebunden sind, und zwar gemäß einer besonders bevorzugten Ausführungsform dergestalt angrenzen und/oder angebunden sind, dass die dem Tragrahmen zugewandten Seitenwandbereiche der Hubplattenschienenelemente mitsamt der als Wandelement ausgebildeten Strebe einen von der Hubplattenebene in Hochachsenrichtung nach oben wegragenden in etwa U-förmigen Wandbereich ausbilden. Ein derartiger Wandbereich umschließt und begrenzt den Stauraum und stellt somit eine weitere Abstütz- und Sicherungseinrichtung für den aufgeladenen Behälter dar.

Für eine besonders stabile und steife Hubplattenrahmenkonstruktion kann weiter wenigstens eine in der Hubplattenebene zwischen den Hubplattenschienenelementen verlaufende Strebe vorgesehen sein, insbesondere im ladeöffnungsseitigen Bereich. Eine derartige flache Strebenanordnung in der Hubplattenebene stellt sicher, dass ein Behälter einfach und ungehindert auf die Hubplatte aufgefahren werden kann.

Besonders bevorzugt ist weiter eine Ausgestaltung, bei der die Hubplattenschienenelemente aus einem abgekanteten Blech hergestellt sind. Mit einem derartigen abgekanteten Blech lassen sich die Hubplattenschienenelemente einfach und dennoch stabil in einstückiger Weise mit geringem Fertigungsaufwand herstellen.

Alternativ oder zusätzlich dazu kann gemäß einer weiteren besonders bevorzugten Ausgestaltung der vorliegenden Erfindungsidee vorgesehen sein, dass die Hubplattenschienenelemente im Räderaufstandsbereich der Hubplattenelemente seitliche, in Hochachsenrichtung von dem Räderaufstandsbereich der Hubplattenelemente wegragende Seitenwände aufweisen, so dass diese einen in etwa U-förmigen Querschnitt ausbilden, wobei die den Streben bzw. dem Strebenverbund zugewandten Seitenwände eine einen definierten Strebenbereich überdeckende Abkantung aufweisen, über die die Hubplattenschienenelemente mit dem Strebenverbund bzw. den Streben fest verbunden sind. Mit einem derartigen Aufbau ergibt sich eine besonders stabile Festlegung der bevorzugt durch ein abgekantetes Blech hergestellten Hubplattenschienenelemente an dem die gesamte Hubplatte aussteifenden Strebenverbund bzw. Streben, da durch die Abkantung ein flächiger Anlagebereich von, bezogen auf die Belastungsrichtung, oben her zur Verfügung gestellt wird, der eine besonders vorteilhafte Ableitung von Kraftspitzen in den Halteplattenbereich ermöglicht. Zudem wird mit einem derartigen Aufbau die Montage des Halteplattenmoduls vorteilhaft erleichtert, da die Befestigungsmittel, zum Beispiel Schweißpunkte oder dergleichen einfach von oben gesetzt werden können. Das Gleiche gilt für den Fall von Niet- und/oder Schraubverbindungen zur Festlegung der Halteplattenschienenelemente am Strebenverbund bzw. den Streben.

Gemäß einer konkreten Ausgestaltung hierzu kann vorgesehen sein, dass die Abkantungen die freien Strebenenden von quer zu den Hubplattenschienenelementen verlaufenden Querstreben und/oder, im Falle eines rechteckförmigen Strebenrahmens, die parallel und unmittelbar benachbart zu den Hubplattenschienenelementen verlaufenden Längsstreben überdecken. Insbesondere im letzteren Falle ergibt sich eine besonders vorteilhafte stabile und flächige Anlageverbindung.

Gemäß einer weiteren besonders bevorzugten Ausgestaltung der vorliegenden Erfindungsidee ist vorgesehen, dass jeweils eines der Hubplattenschienenelemente den quer zur Einfahrrichtung des Behälters nebeneinanderliegenden und voneinander beabstandeten Behälterrädern zugeordnet ist. In diesem Zusammenhang ist es insbesondere vorteilhaft, dass die jeweiligen Hubplattenschienenelemente eine solche Länge aufweisen, dass auf diesen, bei mehreren in Einfahrrichtung beabstandet hintereinander liegenden Behälterrädern oder bei mehreren in dem Stauraum aufgenommenen Behältern, sämtliche dieser in Einfahrrichtung hintereinander liegenden Behälterräder aufgenommen und abgestützt sind. Alternativ oder zusätzlich dazu ist bevorzugt vorgesehen, dass sich die einzelnen Hubplattenschienenelemente in Einfahrrichtung im Wesentlichen über die gesamte Stauraumlänge erstrecken.

Mit einer derartigen konkreten Ausgestaltung ist auf einfache Weise sichergestellt, dass sämtliche Räder eines Behälters in zuverlässiger Weise entlang der Hubplatte verfahren und von dieser nach unten zur Fahrbahn hin abgeschirmt sind.

Die erfindungsgemäßen Transportwägen und die erfindungsgemäße Verfahrensführung sind insbesondere in Verbindung mit Entsorgungsdienstleistungen in der großindustriellen Serienfertigung in Werks- und Montagehallen von besonderem Vorteil, weil hier dann beim Transport der Entsorgungsbehälter außerhalb der Werkshallen auf einfache Weise ein sicherer Transport, ein sicheres Beladen und Entladen sowie auch ein sicherer Schutz gegen Verschmutzen gewährleistet und sichergestellt werden kann. Grundsätzlich können die erfindungsgemäßen Transportwägen jedoch auch zum Transport von im Versorgungsbereich eingesetzten Behältern Verwendung finden.

Besonders bevorzugt ist der Einsatz derartiger Transportwägen in Verbindung mit einem weiter erfindungsgemäß beanspruchten Verfahren zum staplerfreien Transport und Umschlag von mit Abfällen beladenen oder leeren, fahrbaren Entsorgungsbehältern. Gemäß dieser erfindungsgemäßen Verfahrensführung ist vorgesehen, dass wenigstens ein mit Abfall beladener fahrbarer Entsorgungsbehälter in einem rein zu haltenden Weiß- oder Graubereich einer Werkshalle ohne Staplereinsatz in den durch Absenken eines Halteelementes mittels einer Hubvorrichtung des Transportwagens befahrbaren Stauraum des Transportwagens eingefahren und/oder eingeschoben wird. Dort wird der wenigstens eine Entsorgungsbehälter mittels der Hubvorrichtung angehoben sowie weiter mittels diesem Transportwagen zu einer Hub- und Kippvorrichtung einer außerhalb der Werkshalle in einem Schwarzbereich angeordneten Entsorgungsstation verbracht, wo die Hub- und Kippvorrichtung den wenigstens einen auf dem Transportwagen transportierten und mit einer Aufnahme für die Hub- und Kippvorrichtung der Entsorgungsstation versehenen Entsorgungsbehälter an der wenigstens einen Aufnahme erfasst und entleert sowie anschließend wieder auf den Transportwagen zurückstellt. Weiter anschließend wird der Transportwagen mitsamt dem wenigstens einen entleerten Entsorgungsbehälter wieder in den Weiß- oder Graubereich der Werkshalle verfahren, in der der wenigstens eine Entsorgungsbehälter mittels der Hubvorrichtung auf Boden- bzw. Fahrbahnniveau abgesenkt und staplerfrei aus dem Stauraum des Transportwagens herausgefahren wird.

Für eine derartige erfindungsgemäße Verfahrensführung eignet sich insbesondere ein Transportwagen, wie er zuvor in Verbindung mit der erfindungsgemäßen Ausgestaltung eines Transportwagens im Detail näher erläutert und beschrieben worden ist, insbesondere ein Transportwagen, bei dem das wenigstens eine Hubelement, das bevorzugt durch wenigstens eine Hubplatte gebildet ist, im Sinne des Anspruchs 1 sowie gegebenenfalls der weiter darauf rückbezogenen und mit diesem Gegenstand kombinierbaren Merkmale der Ansprüche und der vorhergehenden Beschreibung ausgebildet ist. Denn mit einem derartigen erfindungsgemäßen Transportwagen wird auf besonders einfache und funktionssichere Weise die Befahrbarkeit des Transportwagens ohne Einsatz eines Staplers möglich, so dass auf den Staplereinsatz komplett verzichtet werden kann. Weiter ist es gemäß der erfindungsgemäßen Lösung nicht mehr erforderlich, dass die Entsorgungsbehälter mittels dieser Stapler auf die Transportwägen gehievt werden, und zwar sowohl im Bereich der Werkshallen als auch außerhalb der Werkshallen im Bereich der Entsorgungsstation.

Mit der erfindungsgemäßen Lösung wird somit erstmalig eine Entsorgungslösung zur Verfügung gestellt, bei dem auf den Einsatz von derartigen bisher üblichen Staplern zum Verladen der Entsorgungsbehälter komplett verzichtet werden kann.

Durch die Anbringung von auf die Hub- und Kippvorrichtung der Entsorgungsstation angepassten behälterseitigen Aufnahmen wird dabei auf einfache Weise ein hub- und kippbarer Entsorgungsbehälter geschaffen, der im Bereich der Entsorgungsstation direkt von der Hub- und Kippvorrichtung ergriffen werden kann und somit ebenfalls nicht mehr mittels eines Staplers aufwändig vom Transportwagen herabgehoben und an der Hub- und Kippvorrichtung positioniert werden muss. Vielmehr kann der Transportwagen gemäß der erfindungsgemäßen Lösung mitsamt dem oder den darauf angeordneten Entsorgungsbehälter(n) so nahe an die Hub- und Kippvorrichtung der Entsorgungsstation herangefahren werden, dass diese Hub- und Kippvorrichtung den Entsorgungsbehälter direkt vom Transportwagen herunter ergreifen und entleeren sowie weiter anschließend wieder auf dem Transportwagen platzieren kann.

Wie die zuvor gemachten Ausführungen belegen, ergänzen sich die unterschiedlichen vorrichtungsseitigen als auch verfahrensseitigen Erfindungsdetails wechselseitig.

Die Erfindung wird nachfolgend anhand einer Zeichnung näher erläutert.

Es zeigen:
- Fig. 1: schematisch und perspektivisch einen Transportwagen gemäß der vorliegenden Erfindungsidee mit hier beispielhaft zwei Behälter-Stauräumen, von denen einer mit einer erfindungsgemäßen Hubvorrichtung bestückt ist,
- Fig. 2: schematisch und perspektivisch den Tragrahmen gemäß Fig. 1 mit einem in einem der Stauräume aufgenommenen Entsorgungsbehälter,
- Fig. 3: schematisch eine perspektivische seitliche Draufsicht auf den Tragrahmen gemäß Fig. 1 und 2 mit einer Detaildarstellung des erfindungsgemäßen Hub- und Schwenkmechanismus,
- Fig. 4: schematisch eine in etwa um 90° gedrehte Ansicht des Tragrahmens der Fig. 3,
- Fig. 5: eine schematische Perspektivansicht der erfindungsgemäßen Hubvorrichtung ohne Tragrahmen im angehobenen Zustand,
- Fig. 6: eine Darstellung entsprechend Fig. 5 im abgesenkten Zustand,
- Fig. 7: eine schematische Prinzipskizze, die die Funktionsweise des erfindungsgemäßen Hub- und Schwenkmechanismus in der angehobenen Position zeigt,
- Fig. 8: eine schematische Prinzipskizze, die die Funktionsweise des erfindungsgemäßen Hub- und Schwenkmechanismus in der abgesenkten Position zeigt,
- Fig. 9: schematisch unterschiedliche Bestückungsarten eines Tragrahmens eines erfindungsgemäßen Transportwagens,
- Fig. 10: schematisch eine perspektivische Vorderansicht eines mit einem Versorgungsbehälter bestückten Transportwagens mit einem Spindelantrieb als Verstelleinrichtung,
- Fig. 11: schematisch eine vergrößerte Detailansicht des Spindelantriebs gemäß Fig. 10 in der abgesenkten Position des Hubelementes,
- Fig. 12: schematisch eine vergrößerte Detailansicht des Spindelantriebs der Fig. 10 in einer angehobenen Position,
- Fig. 13 bis 15: unterschiedliche Stellungen eines als Absacksicherung dienenden Hubsicherungsmechanismus,
- Fig. 16: eine zusätzliche Behälterverriegelung im entriegelten Zustand,
- Fig. 17: die Behälterverriegelung nach Fig. 17 im verriegelten Zustand, und
- Fig.18: schematisch und prinzipiell eine das Anheben der Hubplatte unterstützende Gasfeder.

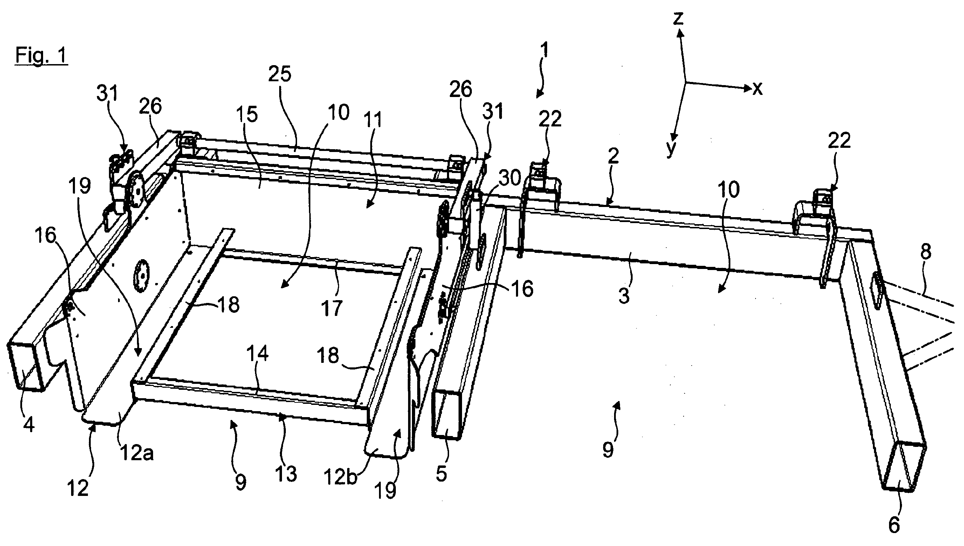

In der Fig. 1 ist schematisch und perspektivisch eine beispielhafte Ausführungsform eines erfindungsgemäßen Transportwagens 1 gezeigt, der einen hier E-förmigen Tragrahmen 2 mit einem in Fahrtrichtung x verlaufenden Längsträger 3 sowie hier drei vom Längsträger abragende, und zwar in eine Richtung y quer zur Fahrtrichtung x abragende Querträger 4, 5 und 6 aufweist, die alle im Wesentlichen eine gleiche Länge aufweisen.

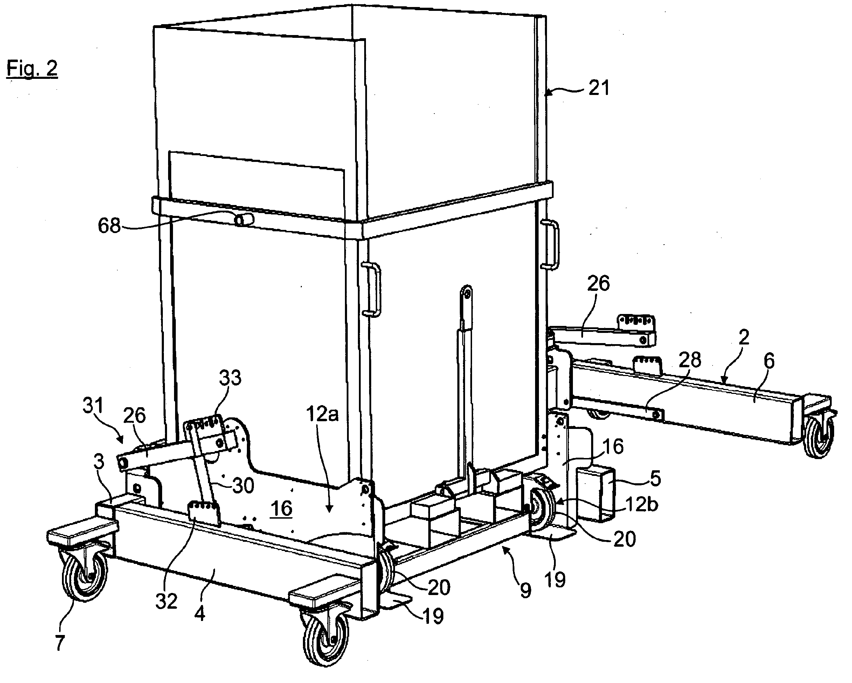

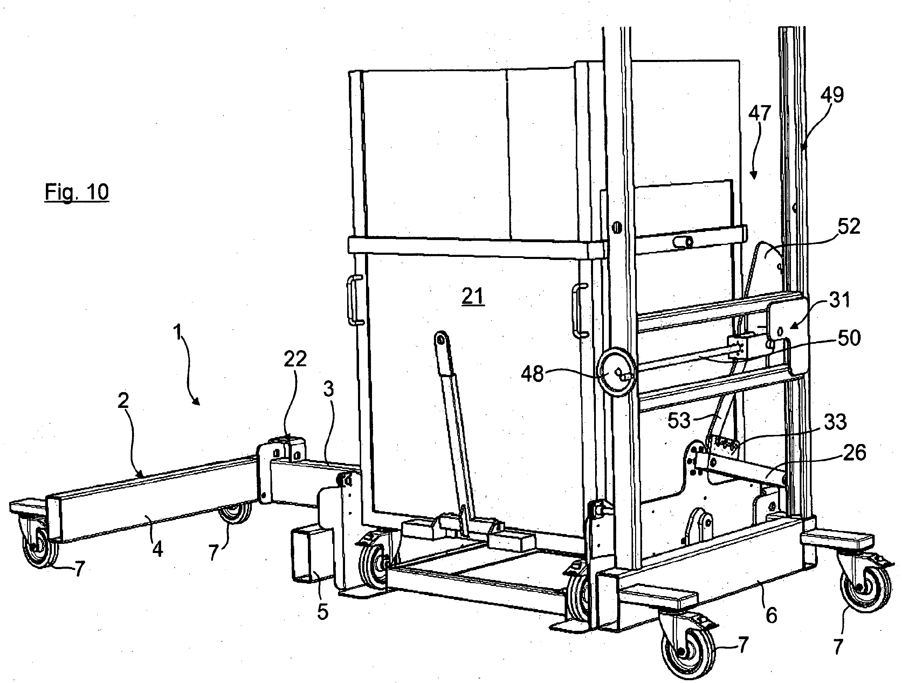

Am Tragrahmen 2 sind hier lediglich äußerst schematisch und beispielhaft in Verbindung mit zum Beispiel der Fig. 2 und der Fig. 10 dargestellte Fahrwerke bzw. Räder 7 angeordnet, die sowohl als Nachlaufräder als auch als mittels einer entsprechenden Lenkung versehene lenkbare Räder ausgebildet sein können.

Ferner greift am Tragrahmen 2 noch eine hier strichpunktiert dargestellte Deichsel 8 an, mittels der der Transportwagen 1 zum Beispiel mit einem weiteren Transportwagen 1 oder mit einer Zugmaschine gekoppelt werden kann. Was die Fahrbarkeit und die Anhängekupplungen angelangt ist der Transportwagen 1 auf jeden Fall herkömmlicher Bauart.

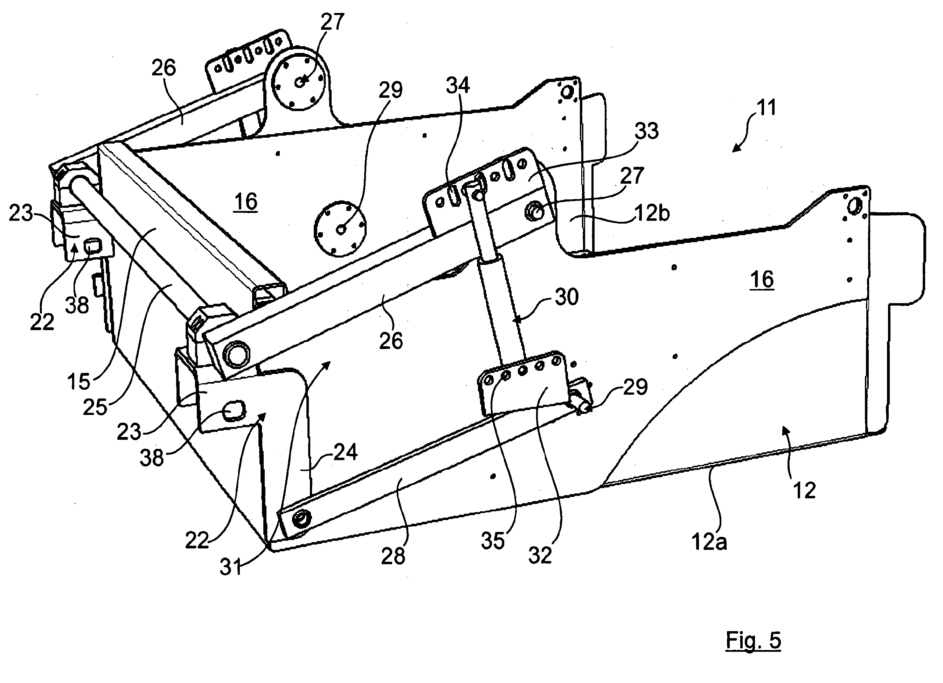

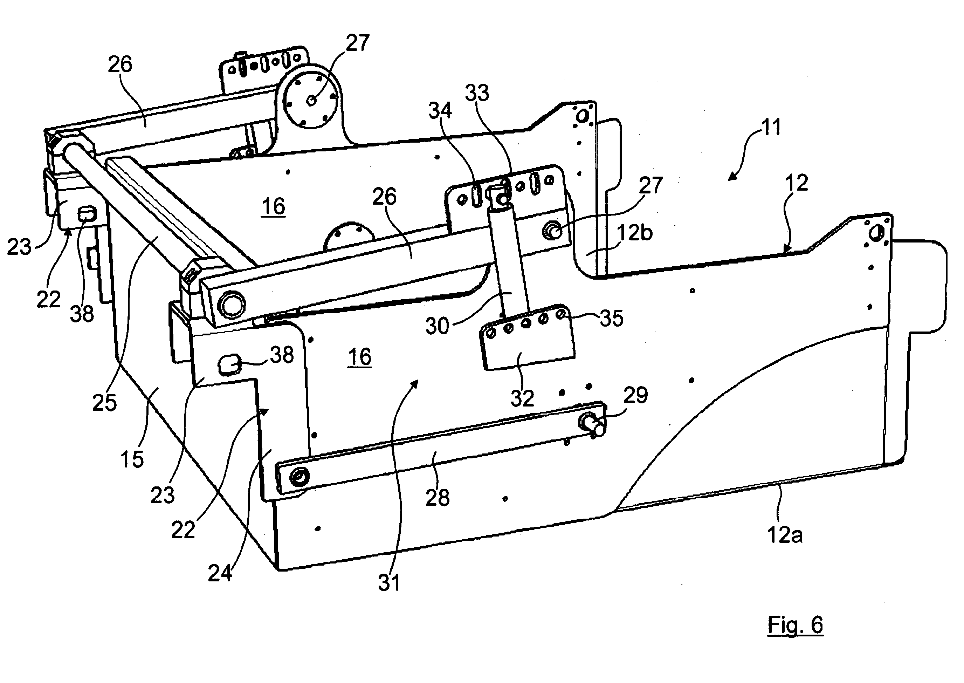

Im gezeigten Ausführungsbeispiel der Fig. 1 weist der Tragrahmen 2 des Transportwagens 1 hier somit zwei quer zur Fahrtrichtung x über eine Ladeöffnung 9 zugängliche Stauräume 10 auf, wobei hier aus Übersichtlichkeitsgründen in lediglich dem in der Bildebene der Fig. 1 linken Stauraum 10 eine in den Fig. 5 und 6 schematisch und perspektivisch dargestellte Hubvorrichtung 11 aufgenommen und tragrahmenseitig in noch zu beschreibender Weise angeordnet ist.

Es versteht sich, dass selbstverständlich auch in dem in der Bildebene der Fig. 1 rechten Stauraum 10 eine Hubvorrichtung 11 in entsprechender Weise angeordnet ist.

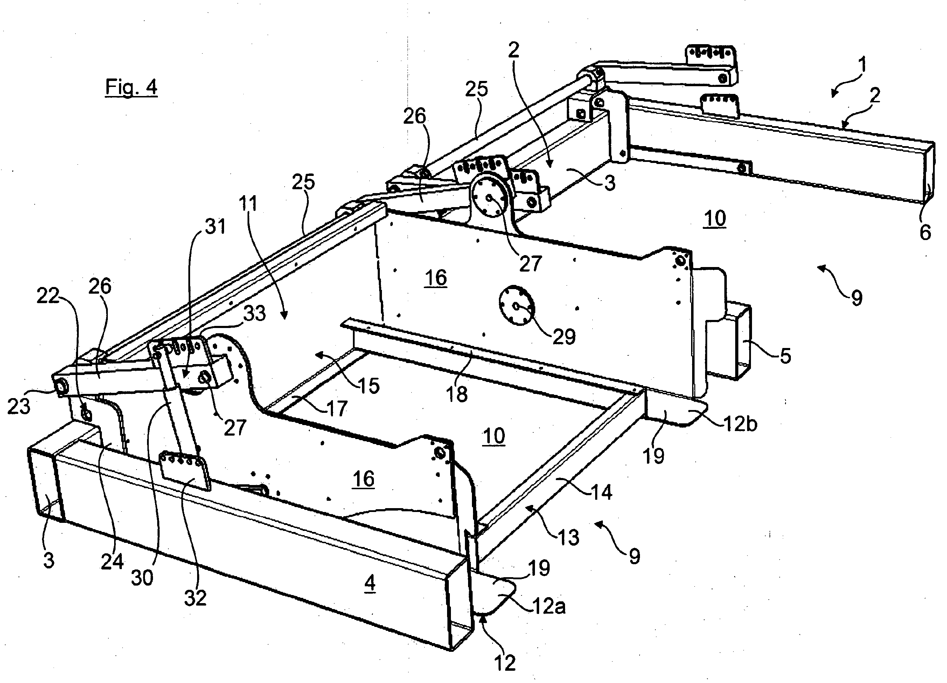

Die Hubvorrichtung 11 besteht, wie dies insbesondere auch aus der Fig. 4 ersichtlich ist, aus einer befahrbaren Hubplatte 12, die hier durch zwei separate und voneinander beabstandete wannen- bzw. schienenartige Hubplattenschienenelemente 12a, 12b gebildet ist, die mittels eines zwischen den Hubplattenschienenelementen 13 verlaufenden Strebenverbunds 13 zu einem stabilen Hubplattenrahmen verbunden sind.

Konkret besteht dieser Strebenverbund hier aus zwei voneinander beabstandeten und im Bereich der freien Hubplattenschienenelementenden verlaufenden Längsstreben 14, 15, die mit den Hubplattenschienenelementen 12a, 12b fest verbunden sind. Die, mit Bezug zur Ladeöffnung 9 vordere Längsstrebe 14 ist durch ein mehr stabförmiges Trägerbauteil gebildet, während die mit Bezug zur Ladeöffnung 9 hintere Längsstrebe 15 durch ein plattenförmiges bzw. wandartiges Bauteil gebildet ist, das mit dem stauraumseitigen hinteren Hubplattenschienenelementen fest verbunden ist und die mittels eines nachfolgend noch näher beschriebenen Strebenverbunds 13 zu einem stabilen Hubplattenrahmen verbunden sind.

Konkret ist vorgesehen, dass die Hubplattenschienenelemente 12a, 12b jeweils mit einem den Tragrahmen zugewandten Seitenwandbereich 16 von der Hubplattenebene nach oben in Hochachsenrichtung z wegragen, wobei diese hubplattenschienenelementseitigen Seitenwandbereiche 16 weiter mit einer bezogen auf die Ladeöffnung 9 im hinteren Stauraumbereich verlaufenden und als plattenförmiges Wandelement 15 ausgebildeten Strebe verbunden sind, so dass an diesem plattenförmigen Wandelement 15, das eine Strebe des Strebenverbunds 13 ausbildet, in der hier gezeigten Ausführungsform (siehe insbesondere Fig. 4) sowohl die hubplattenschienenelementseitigen Seitenwandbereiche 16 als auch die hinteren stauraumseitigen Endbereiche der Hubplattenschienenelemente 12a, 12b angebunden sind. Hierzu weist das plattenförmige Wandelement 15 an einem in Hochachsenrichtung z gesehen unteren Ende bevorzugt eine in den Stauraum 10 weisende Abkantung 17 auf, an der sich der an den Seitenwandbereich 16 anschließende hintere Bereich der Hubplattenschienenelementenden in einer Anlageverbindung abstützen kann. Bevorzugt erfolgt dort auch eine feste Verbindung der Hubplattenschienenelemente 12a, 12b mit der Abkantung 17 bzw. dem Seitenwandbereich 16.

Mit einer derartigen Ausgestaltung bildet somit das plattenförmige Wandelement 15 mitsamt den beiden Seitenwandbereichen 16 der Hubplattenschienenelemente 12a, 12b einen von der Hubplatteneben in Hochachsenrichtung z nach oben wegragenden in etwa U-förmigen Wandbereich aus.

Zur Herstellung des stabilen Strebenverbunds 13 ist weiter eine in der Hubplattenebene zwischen den ladeöffnungsseitigen freien Hubplattenschienenelementenden verlaufende Strebe 14 vorgesehen, die im Anbindungsbereich an die Hubplattenschienenelemente 12a, 12b von einer hubplattenschienenelementseitigen Akantung 18 formschlüssig und in einer Anlageverbindung umgriffen wird, um eine besonders stabile Festlegung und Verbindung zwischen dieser Strebe 14 und den Hubplattenschienenelementen 12a, 12b zu erzielen.

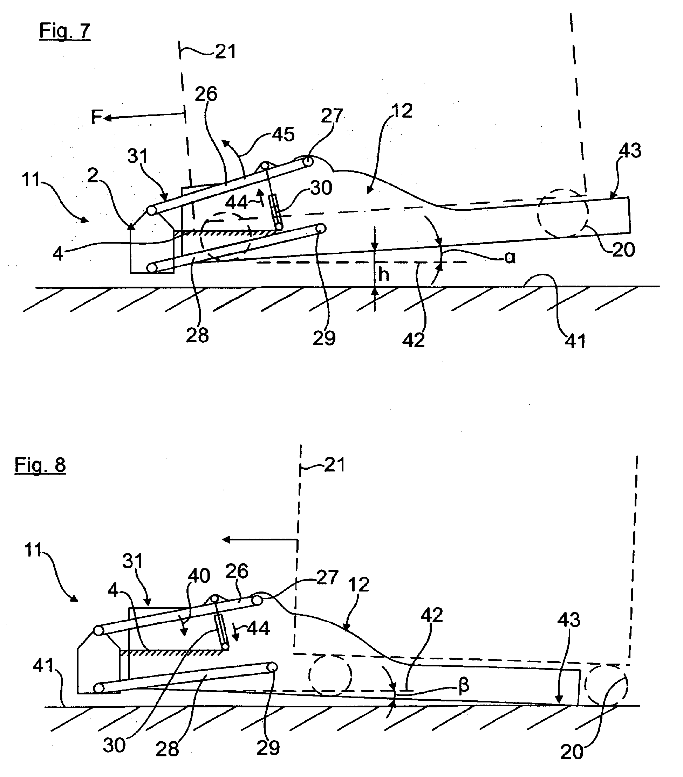

Wie dies insbesondere aus der Fig. 1 und der Fig. 4 ersichtlich ist, weisen die Hubplattenschienenelemente 12a, 12b im Räderaufstandsbereich 19 der Hubplattenschienenelemente 12a, 12b einen in etwa U-förmigen Querschnitt auf, die als Fahrrinnen für die Räder 20 eines in der Fig. 2 dargestellten, verladenen Entsorgungsbehälters 21 ausbilden. In dieser Fig. 2 ist der Entsorgungsbehälter 21 im Stauraum 10 des Tragrahmens 2 aufgenommen. Die konkrete Beladung des Stauraums 10 des Tragrahmens 2 mit einem derartigen Entsorgungsbehälter 21 wird nachfolgend noch näher in Verbindung mit den Fig. 7 und 8 beschrieben. Ferner soll hier darauf hingewiesen werden, dass am Behälter 21 auf gegenüberliegenden Seiten Bolzen 68 angeordnet sind, die eine Aufnahme für eine Hub- und Kippvorrichtung einer Entsorgungsstation und damit insgesamt einen hub- und kippbaren Behälter 21 ausbilden.

Wie dies aus den Fig. 1 und 4 sehr gut ersichtlich ist, erstrecken sich hier die Hubplattenschienenelemente 12a, 12b über im Wesentlichen die gesamte Stauraumlänge.

Zur Befestigung der Hubvorrichtung 11 in den Stauräumen 10 des Tragrahmens 2 sind hier beispielhaft (vergleiche Fig. 1) in Fahrtrichtung x voneinander beabstandete Befestigungswinkel 22 vorgesehen, die fest mit dem Längsträger 3 des Tragrahmens 2 verbunden sind.

Die Befestigungswinkel 22 weisen einen sich an der Oberseite des Längsträgers 3 abstützenden oberen Schenkel 23 und einen davon nach unten in den Stauraum 10 abragenden unteren Schenkel 24 auf.

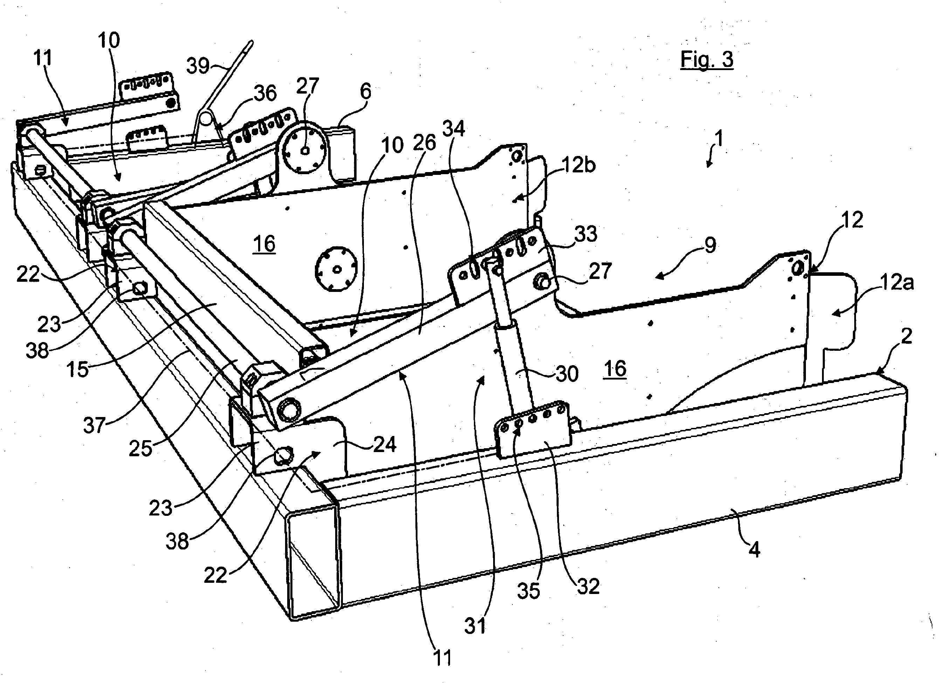

Wie dies insbesondere aus der Zusammenschau der Fig 3 bis 6 ersichtlich ist, wobei die Fig. 5 und 6 die Hubvorrichtung 11 ohne Tragrahmen 2 zeigen, ist an den beiden oberen Schenkeln 23 der Befestigungswinkel 22 eine Schwenkachse 25 gelagert, an dem jeweils ein oberer Hub- und Schwenkarm 26 schwenkbar gelagert ist. Dieser obere Hub- und Schwenkarm 26 ist weiter am jeweils zugeordneten Seitenwandbereich 16 der jeweiligen Hubplattenschienenelemente 12a, 12b schwenkbar an einem hier oberen Angriffspunkt 27 getagert.

Wie dies insbesondere lediglich aus den Fig. 5 und 6 ersichtlich ist, ist am unteren Schenkel 24 ein unterer Hub- und Schwenkarm 28 schwenkbar angelenkt. Dieser untere Hub- und Schwenkarm 28 ist weiter in einem, bezogen auf die Hochachsenrichtung z, mittleren Bereich des Seitenwandbereichs 16 der jeweils zugeordneten Hubplattenschienenelemente 12a, 12b an einem unteren Angriffspunkt 29 schwenkbar angelenkt.

Wie dies insbesondere aus den Fig. 5 und 6 ersichtlich ist, sind die beiden Angriffspunkte 27 bzw. 29 beabstandet und versetzt zueinander am jeweiligen Seitenwandbereich 16 angeordnet, was im vorliegenden Fall ebenso für die befestigungswinkelseitigen Anlenkpunkte der Hub- und Schwenkarme 26, 28 gilt.

Die beiden Hub- und Schwenkarme 26, 27 bilden zusammen mit einer Zylinder-Kolben-Einheit einen erfindungsgemäßen Hub- und Schwenkmechanismus 31 der Hubvorrichtung 11 aus. Diese Zylinder-Kolben-Einheit 30 ist zum einen mittels einer hier lediglich schematisch dargestellten Flanschplatte 32 am jeweils zugeordneten Querträger 4, 5 bzw. 6 angebunden, und zwar insbesondere schwenkbar angebunden. Das gegenüberliegende Ende der Zylinder-Kolben-Einheit 30 ist dagegen ebenfalls wiederum zum Beispiel über eine Flanschplatte 33 am oberen Hub- und Schwenkarm 26 angebunden, bevorzugt gelenkig angebunden.

Wie dies insbesondere aus den Fig. 5 und 6 ersichtlich ist, weisen die beiden Flanschplatten 32, 33 jeweils ein Lochmuster 34 bzw. 35 mit mehreren Ausnehmungen auf, in welchen lochartigen Ausnehmungen die Zylinder-Kolben-Einheit 30 zur Einstellung unterschiedlicher Hubhöhen bzw. unterschiedlicher Schwenkwinkel der Hubplatte 12, was nachfolgend in Verbindung mit den Fig. 7 und 8 noch näher erläutert ist, in unterschiedlicher Weise durch Versetzen der jeweiligen Anbindungspunkte in den Lochmustern 34 bzw. 35 angebunden werden kann.

Diese Zylinder-Kolben-Einheit 30 bildet eine Verstelleinrichtung aus, insbesondere eine hydraulische oder pneumatische Stelleinrichtung, die von einer in der Fig. 3 lediglich äußerst schematisch und beispielhaft dargestellten, am Querträger 6 angeordneten Betätigungseinrichtung 36 hydraulisch oder pneumatisch ansteuerbar ist. Die zu den Zylinder-Kolben-Einheiten 30 geführten Versorgungsleitungen 37 sind in der Fig. 3 lediglich äußerst schematisch durch eine strichpunktierte Linie dargestellt, wobei die Versorgungsleitungen 37 (Rückführleitung und Zuführleitung) beispielsweise durch Ausnehmungen 38 im oberen Schenkel 23 der Befestigungswinkel 22 hindurch geführt sind. Die Versorgung der Zylinder-KolbenEinheiten 30 mit einem Arbeitsmedium ist herkömmlicher Natur und Bauart und wird daher nicht weiter beschrieben.

Bei einer Betätigung eines Bedienhebels 39 der Betätigungseinrichtung 36 kann je nach zum Beispiel Ventilstellung, ein Ausfahren der Zylinder-Kolbeneinheit 30 erfolgen, wie dies in der Fig. 5 dargestellt ist, oder aber auch ein Einfahren bzw. Zusammenfahren der Zylinder-Kolben-Einheit 30 erfolgen, wie dies in der Fig. 6 schematisch dargestellt ist.

Je nach der Verlagerungsrichtung der Zylinder-Kolben-Einheit 30 wird dabei die Hubplatte 12 angehoben oder abgesenkt, wie dies nachfolgend schematisch anhand der Prinzip- und Funktionsskizzen der Fig. 7 und 8 näher erläutert wird:
In der Fig. 7 ist, ebenso wie in der Fig. 8, schematisch und beispielhaft die schwenkbare Anlenkung der oberen und unteren Hub- und Schwenkarme 26, 28 am Tragrahmen 2 gezeigt. Ferner ist die feste Anbindung der Zylinder-Kolben-Einheit 30 am Tragrahmen 2 durch einen lediglich äußerst schematisch dargestellten Querträger 4 angedeutet.

Gemäß einem wesentlichen Erfindungsaspekt sind die oberen Hub- und Schwenkarme 26 bzw. 28 und deren Angriffspunkte 27 bzw. 29 an den Seitenwänden 16 der Hubplattenschienenelemente 12a, 12b so gewählt, dass die Hubplatte 12 bzw. die Hubplattenschienenelemente 12a, 12b beim in der Fig. 8 durch den Pfeil 44 angedeuteten Zusammenfahren der Zylinder-Kolben-Einheit 30 und der dadurch bedingten Verlagerung des oberen Hub- und Schwenkarms 26 nach unten (Pfeil 40) ebenfalls nach unten abgesenkt wird, wobei gleichzeitig mittels des unteren Hub- und Schwenkarms 28 eine solche Zwangsführung der Hubplatte 12 bzw. der Hubplattenschienenelemente 12a, 12b erfolgt, dass die Hubplatte in der in der Fig. 8 dargestellten abgesenkten Position gegen die parallel zur Fahrbahn 41 verlaufende horizontal Ebene 42 in Richtung vom Stauraum 10 weg abgeschwenkt bzw. abgekippt wird (Winkel β in Fig. 8) so dass ein vorderer, ladeöffnungsseitiger Randbereich 43 der Hubplatte 12 auf der Fahrbahn 41 aufliegt und eine Auffahrrampe für einen Entsorgungsbehälter 21 ausbildet, der in der Fig. 8 lediglich strichliert dargestellt ist.

Nachdem der Entsorgungsbehälter 21 auf die Hubplatte 12 aufgefahren ist (vergleiche Fig. 2) und somit dessen Räder 7 nach unten zur Fahrbahn 41 hin abgeschirmt sind, wird durch erneute Betätigung der Betätigungseinrichtung 36 die Zylinder-Kolben-Einheit 30 in der in der Fig. 7 gezeigten Art und Weise ausgefahren (Pfeil 44), wodurch der obere Hub- und Schwenkarm 26 entsprechend des Pfeils 45 nach oben verschwenkt wird, was dazu führt, dass die Hubplatte 12 um eine definierte Höhe h nach oben von der Fahrbahn 41 weg relativ zum ortsfest verharrenden Tragrahmen 2 angehoben wird. Der untere Hub- und Schenkarm 28 bewirkt dabei bei dieser nach oben gerichteten Verlagerungsbewegung der Hubplatte 12 wiederum eine Zwangsführung der Hubplatte 12 dergestalt, dass diese gegen die parallel zur Fahrbahn 41 verlaufende Horizontalebene 42 in Richtung zum Stauraum 10 hin aufgeschwenkt wird (Winkel α), so dass auf den Entsorgungsbehälter 21 eine diesen in Stauraum-Einfahrrichtung beaufschlagende Kraftkomponente F im Sinne einer Hangabtriebskraft einer schiefen Ebene wirkt, wodurch beim Fahren des Transportwagens 1 entlang der Fahrbahn 41 sichergestellt ist, dass der Entsorgungsbehälter 21 funktionssicher im Bereich des Stauraums gehalten werden kann.

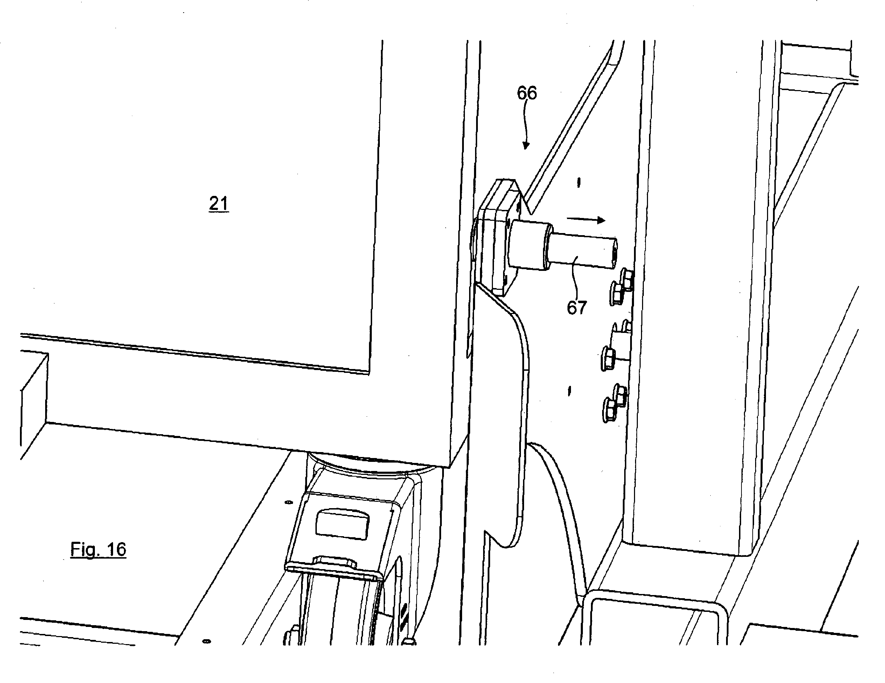

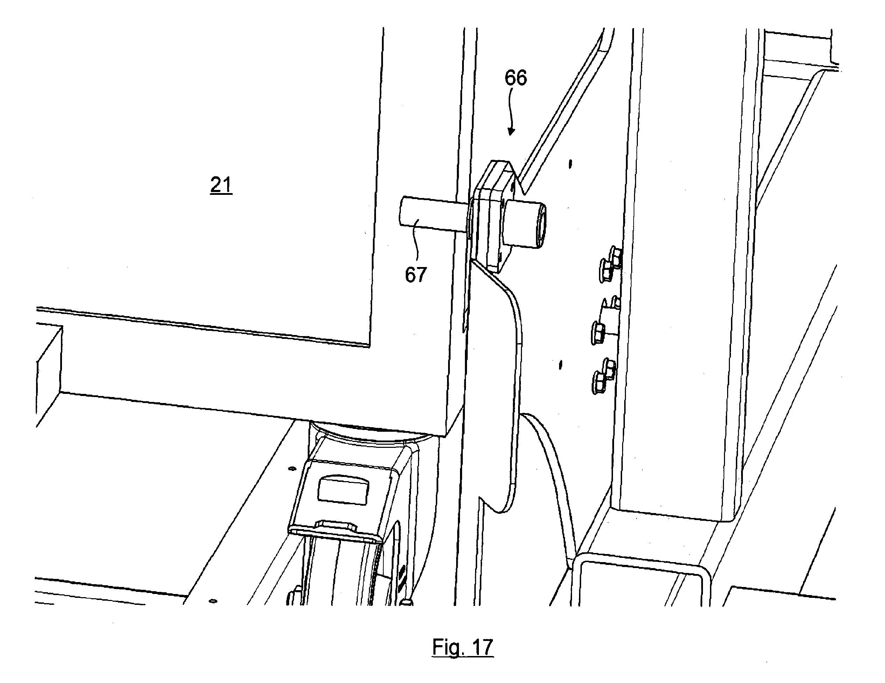

Zusätzlich hierzu kann zur weiteren Fixierung des Entsorgungsbehälters 21 im Stauraum 10 auch noch eine weitere Fixiereinrichtung im ladeöffnungsseitigen Seitenwandbereich 16 der Hubplattenschienenelemente 12a, 12b vorgesehen sein, zum Beispiel in Form eines in den Fig. 16 und 17 nachfolgend noch näher erläuterten Sicherungsbolzens 46.

In den Fig. 7 und 8 sind hier lediglich beispielhaft und schematisch jeweils die beiden Maximalstellungen der Hubplatte in der angehobenen Position (Fig. 7) und in der abgesenkten Position (Fig. 8) dargestellt. Selbstverständlich bewirkt die Zwangsführung des Hub- und Schenkmechanismus 31 in Zwischenstellungen eine andere Neigungslage der Hubplatte 12 gegenüber der Horizontalebene 42. Sollte die Möglichkeit- vorgesehen sein, zwischen diesen beiden Maximalstellungen eine Zwischenstellung der Hubplatte einzustellen bzw. zu fixieren, so ergibt sich dann ein entsprechend angepasster Neigungswinkel. Als zusätzliches Sicherheitsmerkmal kann dabei vorgesehen sein, dass eine erstmalige Verrastung der Hubplatte in einer angehobenen Position erst dann möglich ist, wenn sich die Hubplatte wenigstens ein einer parallelen Ausrichtung zur Horizontalebene befindet, bevorzugt erstmals mit einem bestimmten Neigungswinkel gegen die Horizontalebene in Richtung zum Stauraum 10 hin geneigt ist.

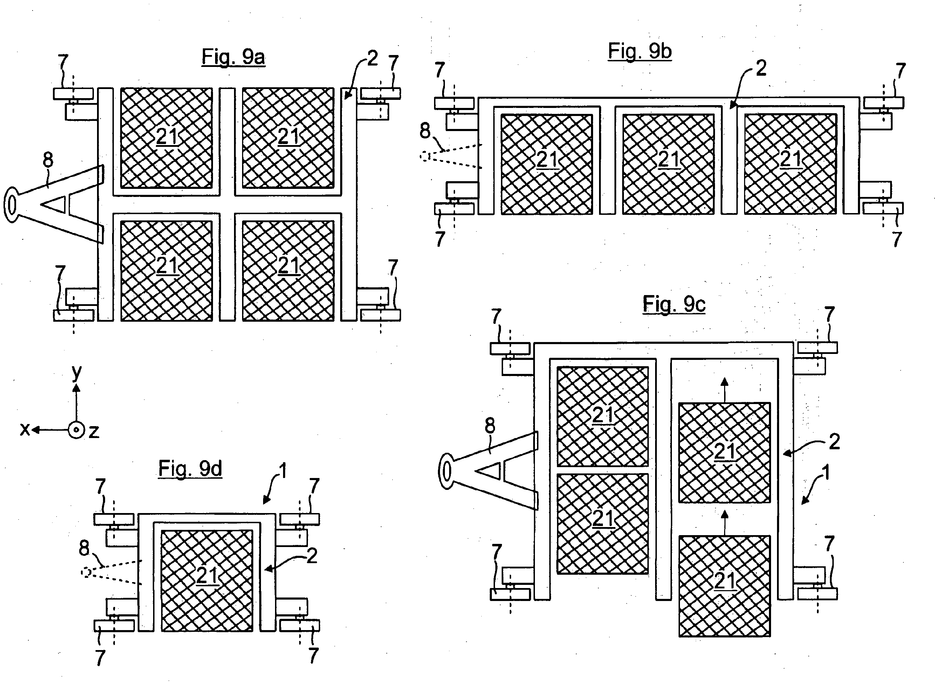

In der Fig. 9 sind schließlich unterschiedliche Tragrahmen-Ausführungsformen gezeigt, so zum Beispiel in der Fig. 9a, bei der jeweils auf in Querrichtung y gegenüberliegenden Tragrahmenseiten mehrere, hier zwei Stauräume 10 für jeweils einen Entsorgungsbehälter 21 vorgesehen sind.

In der Fig. 9b ist ein Tragrahmen gezeigt, bei dem drei Entsorgungsbehälter lediglich von einer Seite her, bezogen auf Querrichtung, in die entsprechenden Stauräurne 10 des Transportwagens 1 verbracht werden können.

In der Fig. 9c ist eine Ausführungsform gezeigt, bei der ein Tragrahmen 2 von einer Seite her zwei Laderäume bzw. Stauräume 10 aufweist, in welche mehrere, hier beispielsweise zwei Entsorgungsbehälter 21 eingefahren und verstaut werden können. In der Fig. 9d ist schließlich eine Ausführungsform gezeigt, bei der in einem Tragrahmen ein einziger Entsorgungsbehälter 21 transportiert und gelagert wird.

Die Ausführungsformen der Fig. 9a bis 9d sollen lediglich verdeutlichen, dass es vielfältigste unterschiedliche Möglichkeiten gibt, Stauräume 10 an einem Tragrahmen 2 eines Transportwagens 1 auszubilden. Die in der Fig. 9 gezeigten unterschiedlichen Ausführungsarten sind lediglich beispielhaft zu verstehen und stellen in keinster Weise eine Einschränkung oder Beschränkung dar.

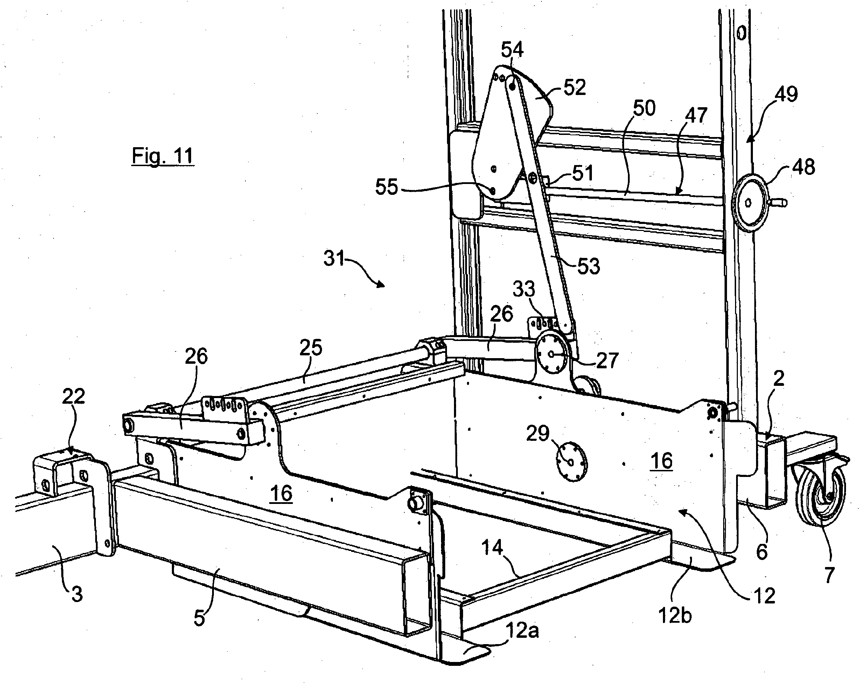

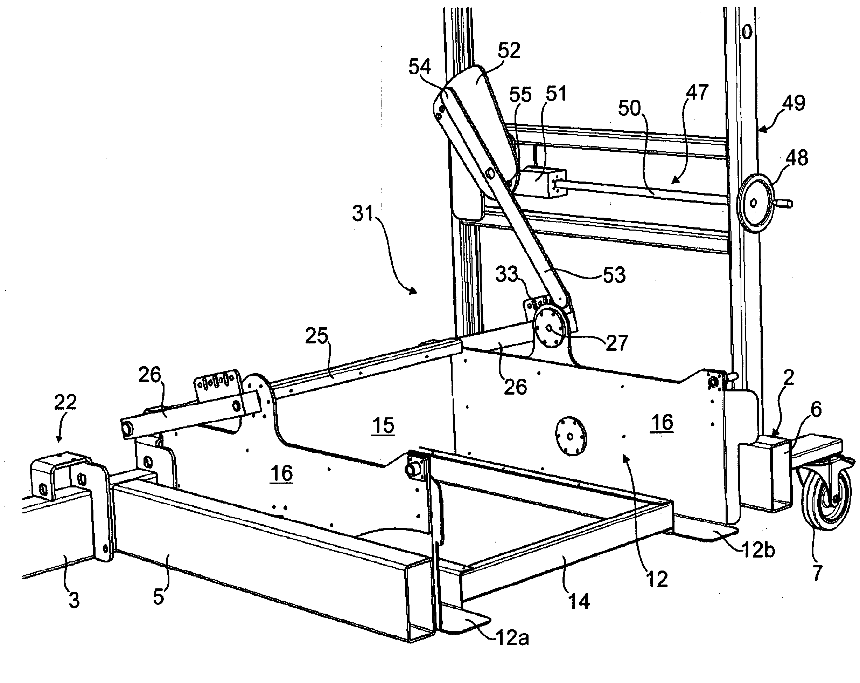

In der Fig. 10 ist weiter eine alternative Ausgestaltung gezeigt, bei der die Verstelleinrichtung durch einen in der Fig. 11 und 12 näher und im Detail dargestellten Spindeltrieb 47 gebildet ist. Dieser Spindeltrieb 47 umfasst hier eine Handkurbel 48, die in einem am Tragrahmen gehalterten Gestänge 49 mit einer daran angeschlossenen Gewindespindel 50 verdrehbar gelagert ist. Ein als Spindelmutter 51 fungierendes Bauelement ist über eine durch zwei Hebel 52, 53 gebildete Hebelmechanik hier mit der oberen Flanschplatte 33 des oberen Hub- und Schwenkarms 26 so verbunden, dass bei einer entsprechenden Betätigung der Handkurbel 48 und damit der Gewindespindel 50 die Spindelmutter 51 entlang der Gewindespindel 50 verlagert wird, wodurch die Hebel 52, 53 so zueinander verschwenkt werden, dass zum einen die Hubplatte 12 in die in der Fig. 11 dargestellte abgesenkte Position verlagert werden kann oder alternativ dazu die Hubplatte 12, wie in der Fig. 12 dargestellt, in die angehobene Position verlagert werden kann. In analoger Weise bewirkt hier der untere Hub- und Schwenkarm 28, der hier nicht im Detail dargestellt ist, die Zwangsführung dergestalt, dass die Hubplatte 12 in die entsprechende Neigungsposition gegenüber der Horizontalebene 42 gekippt bzw. verschwenkt wird. Insofern ist der Aufbau identisch mit demjenigen, wie er zuvor geschildert worden ist. Um dieses Anheben und Absenken zu bewirken, sind die beiden Hebel 52, 53 miteinander im Gelenkpunkt 54 gelenkig miteinander verbunden. Der Hebel 52 ist hier zudem mit einem dem Gelenkpunkt 54 gegenüberliegenden Gelenkpunkt 55 schwenkbar an der Spindelmutter 51 angelenkt. Die Anbindungs- bzw. Gelenkpunkte 54, 55 sowie die Hebellängen der Hebel 52, 53 sind hier so gewählt, dass sich die gewünschte Hubhöhe ergibt. Veränderungen der Hubhöhe sind auch hier wiederum über das Lochmuster der Flanschplatte und die unterschiedliche Anbindung des Hebels 53 an der Flanschplatte 33 möglich.

Der Hebel 52 ist hier lediglich beispielhaft als Hebelplatte ausgeführt. Der Spindeltrieb 47 kann dabei je nach Bedarf so ausgeführt werden, dass das Anheben und das Absenken durch Drehen in unterschiedliche Drehrichtungen der Handkurbel vorgenommen wird. Alternativ dazu kann aber auch vorgesehen sein, dass die Geometrie der Hebel 52, 53 so gewählt wird, dass beim Heben ein sogenannter Verknieungspunkt überschritten wird und sich der Behälter beim Weiterdrehen in gleicher Kurbelrichtung auch wieder senkt (bzw. andersrum zuerst senkt und dann wieder hebt).

Ansonsten entspricht der Aufbau demjenigen, wie er in Verbindung mit den zuvor gezeigten Ausführungsformen bereits ausführlich erläutert worden ist, so dass diesbezüglich hierauf verwiesen wird.

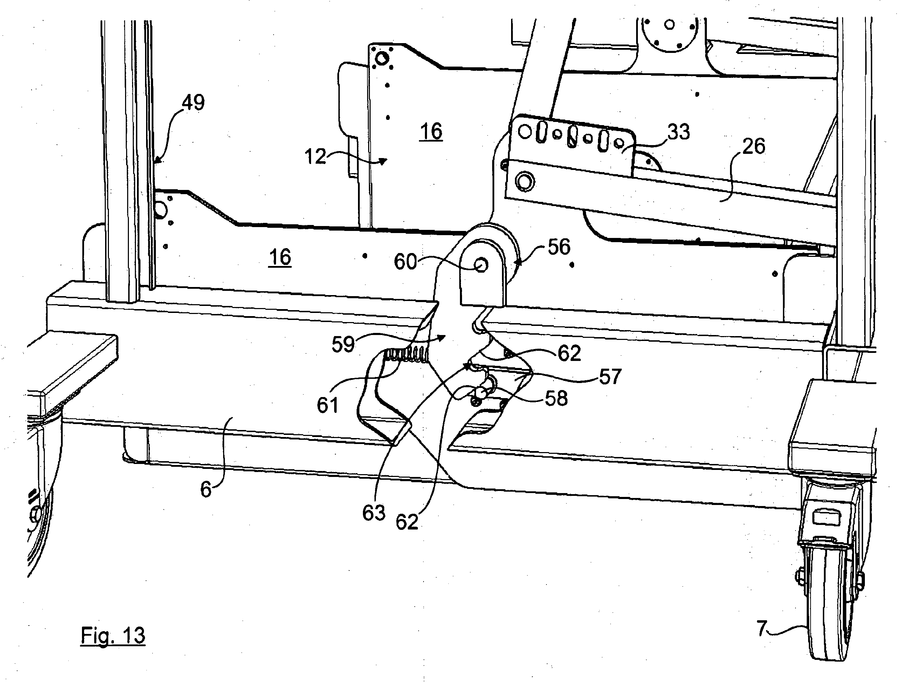

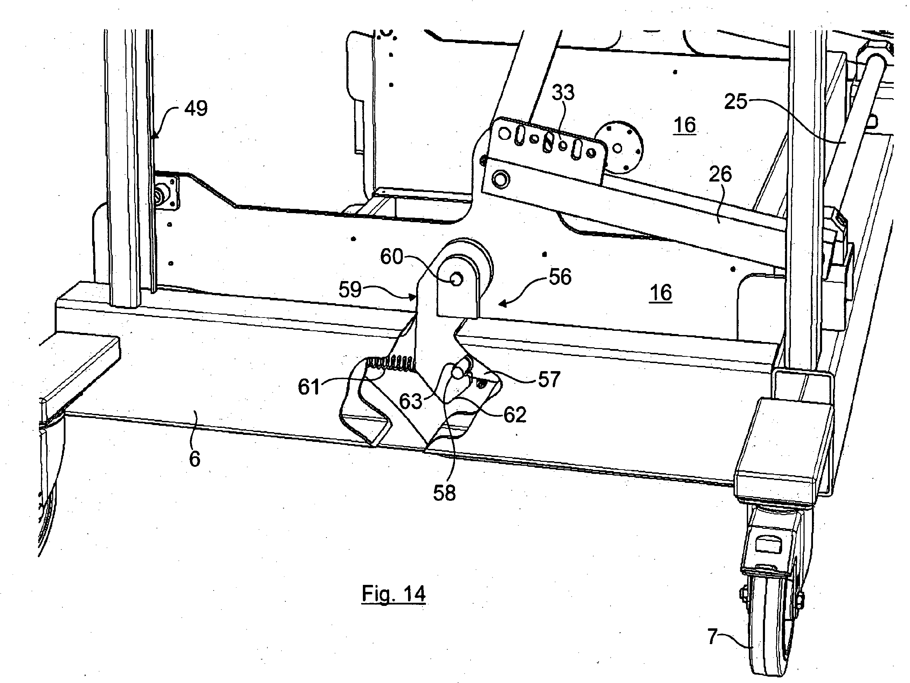

In den Fig. 13 bis 15 ist schließlich lediglich äußerst schematisch und beispielhaft eine erfindungsgemäße Hub- bzw. Absacksicherung 56 gezeigt, mittels der die Hubplatte 12 in unterschiedlichen Hubstellungen fixiert werden kann und/oder gegen unerwünschtes Absacken gesichert ist. Konkret weist diese Hubsicherung 56 ein hubelementseitiges Rastelement 57 mit einem Rastbolzen 58 auf, das mit einem hier sägezahnartig mit Rasthaken ausgebildeten tragrahmenseitigen Rastgegenelement 59 in unterschiedlichen Hubpositionen zusammenwirkt. Hierzu ist das tragrahmenseitige Rastgegenelement 59 am Anlenkpunkt 60 schwenkbar am hier aufgebrochen gezeigten Querträger 6 des Tragrahmens 2 angelenkt und zum Beispiel mittels einer Feder 61 in die Eingriffsstellung vorgespannt. Wie das weiter aus der Fig. 13 gut ersichtlich ist, sind am tragrahmenseitigen Sägezahnprofil Anlaufschrägen 62 ausgebildet, an denen sich der Rastbolzen 58 in der in der Fig. 13 gezeigten Grundstellung abstützt. Wird nun die Hubvorrichtung 11 zum Ablassen betätigt, zum Beispiel durch Verschwenken eines Ablasshebels als Bedienhebel 39, so kann, zum Beispiel im Sinne eines Bowdenzugs über die Feder 61 eine Zugkraft auf das tragrahmenseitige Rastgegenelement 59 ausgeübt und dieses nach hinten vom Rastbolzen 58 weg verschwenkt werden, wodurch die nach unten gerichtete Verlagerung des Rastbolzens 58 freigegeben wird und die Halteplatte 42 auf den Boden bzw. die Fahrbahn abgesenkt werden kann. Die Rückverlagerung des tragrahmenseitigen Rastgegenelements 59 aus der zurückverlagerten und federvorgespannten Position in die in der Fig. 14 gezeigte Eingriffsposition kann dann zum Beispiel durch entsprechende Betätigung der Betätigungseinrichtung oder selbsttätig erfolgen.

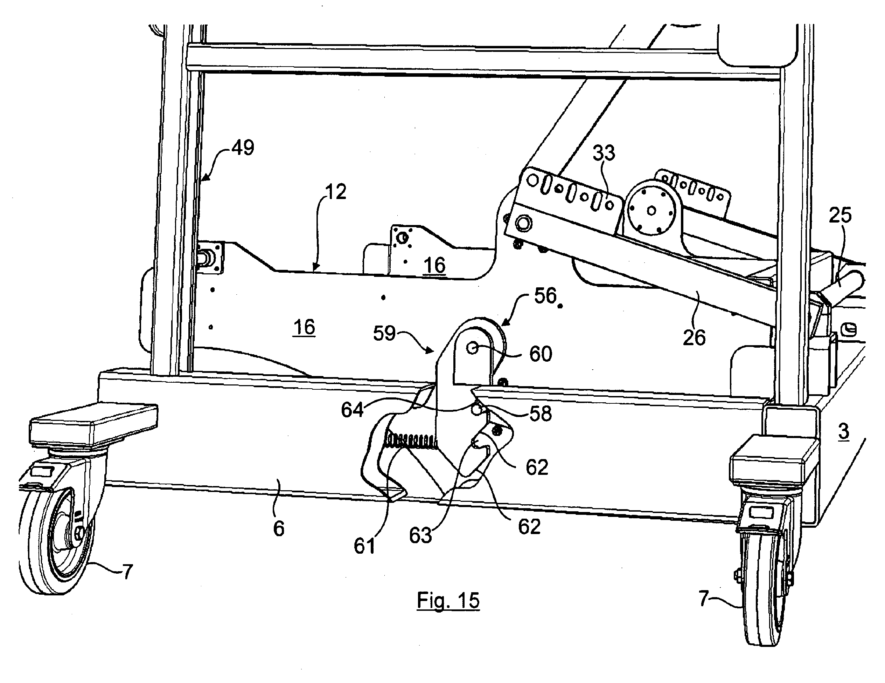

In der Fig. 13 ist zum Beispiel die abgesenkte Position der Halteplatte 12 gezeigt, während die Fig. 14 eine Zwischenposition zeigt. In der Fig. 15 ist schließlich die angehobene Position der Halteplatte 12 gezeigt, bei der der Rastbolzen 58 des hubelementseitigen Rastelementes 57 in eine obere Rastausnehmung 64 einrastet. Um in die unterschiedlichen Rastpositionen beim Anheben der Hubplatte 12 einrasten zur können., gleitet der Rastbolzen 58 entlang der Anlaufschräge 62 nach oben und drängt das Rastgegenelement- 59 bzw. verschwenkt dieses von der Eingriffsstellung weg, bevor der Rastbolzen 58 in Rastposition wieder am Rastgegenelement 59 ver- bzw. eingerastet wird, wozu das Rastgegenelement 59 wieder in seine Rastposition zurückverlagert wird, bevorzugt federvorgespannt zurückverlagert wird. Dieser Vorgang kann solange wiederholt werden bis sich die Hubplatte 12 in der obersten Position befindet.

Grundsätzlich kann eine derartige Hubsicherung 56 lediglich an einer Seite der Hubplatte 12 angeordnet sein. Die symmetrische Anordnung auf gegenüberliegenden Hubplattenseiten ist jedoch die bevorzugte Ausgestaltung.

Wie bereits zuvor angedeutet, ist es ein besonderer Vorteil, dass bei einer Betätigung der Betätigungseinrichtung, zum Beispiel eines entsprechenden Bedienhebels, beim Ablassen der Hubplatte 12 eine solche Zugkraft auf die Feder 61 wirkt, die das tragrahmenseitige Rastgegenelement 59 außer Eingriff mit dem Rastbolzen 58 hält, da dann sichergestellt ist, dass bei einem Versagen der zum Beispiel die Feder 61 beaufschlagenden bzw. betätigenden Hydraulik, zum Beispiel durch einen Druckverlust oder durch eine Undichtigkeit, sichergestellt ist, dass die Feder 61 nicht betätigt und somit das tragrahmenseitige Rastgegenelement 59 nicht vom Rastbolzen 58 wegverlagert ist, so dass dieser eben in seiner Funktion als Absenksicherung dann in den Rastausnehmungen 63 bzw. 64 einrasten kann und somit ein unkontrolliertes Absenken auf die Fahrbahn vermieden wird.

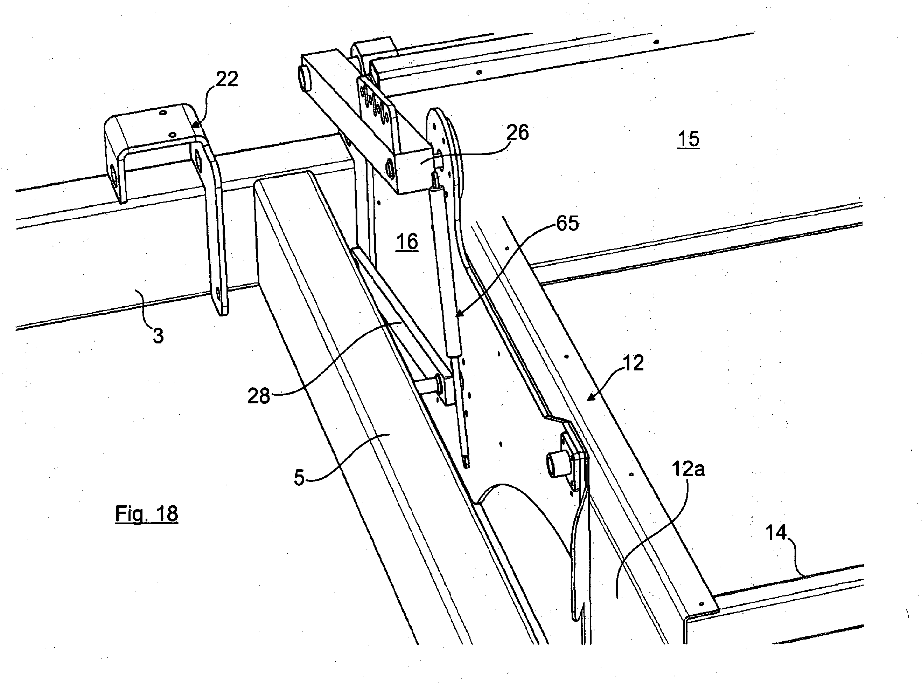

Wird die Hubsicherung 56 in Verbindung mit einem Spindeltrieb 47 eingesetzt, kann der Spindeltrieb 47 so ausgelegt sein, dass nach dem Einrasten die Last durch ein leichtes Absenken direkt auf die Hubsicherung 56 verlegt wird, um dynamische Kräfte von der asymmetrisch aufgebauten Hubvorrichtung 11 zu nehmen. In diesem Fall muss dann vor dem Entriegeln gegebenenfalls leicht angehoben werden. Besonders bevorzugt ist auch eine Ausgestaltung, wie sie lediglich äußerst schematisch und beispielhaft in der Fig. 18 dargestellt ist. Dort ist, insbesondere bei hohen Lasten auf die Hubplatte 12 und damit den Transportwagen 1 eine zusätzliche Federunterstützung in Form einer Gasfeder 65 vorgesehen, die einerseits an der Hubplatte 12, hier beispielhaft am Seitenwandbereich 16 schwenkbar angelenkt ist und die andererseits am oberen Hub- und Schwenkarm 26 schwenkbar angelenkt ist, was in der Fig. 18 lediglich äußerst schematisch und beispielhaft dargestellt ist. Eine derartige Gasfeder 65 kann zum Beispiel dergestalt in Richtung Anheben der Hubplatte 12 vorgespannt sein, dass diese das Gewicht der Hubplatte 12 im Wesentlichen bzw. gegebenenfalls ganz kompensieren kann. Die resultierende Federkraft darf allerdings die Gewichtskraft der Hubplatte 12 nicht überschreiten, da sonst die leere Hubplatte 12 angehoben werden würde. Auch hier kann wiederum eine derartige Gasfeder 65 lediglich an einer Seite, bevorzugt jedoch an beiden gegenüberliegenden Seiten der Hubplatte 12 angeordnet sein. Ansonsten entspricht auch hier der Aufbau demjenigen der zuvor ausführlich geschilderten Ausführungsformen.

In den Fig. 16 und 17 ist lediglich noch schematisch und beispielhaft eine Behältersicherung 66 gezeigt, die hier einen axial verschiebbaren Bolzen 67 aufweist. Alternativ hierzu wäre auch ein klappbarer Hebel und/oder eine federbelastete Lösung, die an dem jeweiligen Behälter 21 einschnappt, möglich. Eine derartige Behältersicherung 66 kann beispielsweise dergestalt funktionieren, dass beim Anheben der Hubplatte 12 die Behältersicherung 66 automatisch verriegelt und sich beim Absenken von selbst löst, was zum Beispiel in Verbindung mit einer Pneumatik oder Hydraulik, zum Beispiel mittels einer entsprechenden Zylinderanordnung mit Rückzugfeder, umgesetzt sein kann. Dies ist hier aber nicht dargestellt.

Alternativ dazu kann auch vorgesehen sein, dass der Bolzen 67 nach dem vollständigen Einschieben des Behälters 21 von selbst einschnappt und vor der Entnahme gelöst werden muss, was manuell oder selbsttätig automatisch erfolgen kann.

Ansonsten entspricht auch hier wiederum der Aufbau demjenigen, wie er zuvor geschildet worden ist.

## Patentansprüche

1. Transportwagen für den Transport von fahrbaren Behältern (21), mit einem Tragrahmen (2), der an wenigstens einer Seite wenigstens einen über eine Ladeöffnung (9) zugänglichen Behälter-Stauraum (10) aufweist, und mit wenigstens einer am Tragrahmen (2) angeordneten Hubvorrichtung (11), die wenigstens ein innerhalb des Stauraums (10) angeordnetes Hubelement (112) aufweist, mittels dem ein Behälter (21) relativ zur Fahrbahn (41) absenkbar und anhebbar ist, wobei die Hubvorrichtung (11) einen mit dem Tragrahmen (2) und mit dem Hubelement (12) mittelbar oder unmittelbar gekoppelten Hub- und Schwenkmechanismus (31) aufweist, mittels dem das Hubelement (12) in der abgesenkten Position zwangsgeführt gegen die parallel zur Fahrbahn (41) verlaufende Horizontalebene (42) in Richtung vom Stauraum (10) weg abgeschwenkt ist, **dadurch gekennzeichnet, dass** das Hubelement (12) mittels des Hub- und Schwenkmechanismus (31) in der angehobenen Position so zwangsgeführt gegen die parallel zur Fahrbahn (41) verlaufende Horizontalebene (42) in Richtung zum Stauraum (10) hin aufgeschwenkt ist, dass auf den wenigstens einen Behälter (21) eine diesen in Stauraum-Einfahrrichtung beaufschlagende Kraftkomponente (F) wirkt.

2. Transportwagen nach Anspruch 1, **dadurch gekennzeichnet, dass** das Hubelement (12) mittels des Hub- und Schwenkmechanismus (31) in der abgesenkten Position so zwangsgeführt in Richtung vom Stauraum (10) weg gegen die Horizontalebene (42) abgeschwenkt oder abgekippt ist, dass ein vorderer, ladeöffnungsseitiger Randbereich (43) des Hubelementes (12) auf der Fahrbahn (41) aufliegt und/oder das Hubelement (12) eine Auffahrrampe ausbildet.

3. Transportwagen nach Anspruch 1 oder Anspruch 2, **dadurch gekennzeichnet, dass** der Hub- und Schwenkmechanismus (31) wenigstens einen an wenigstens einer Hubelementseite angreifenden Hub- und Schwenkarm (26, 28), vorzugsweise jeweils wenigstens einen auf zwei gegenüberliegenden Hubelementseiten angreifenden Hub- und Schwenkarm, aufweist, der einerseits unmittelbar oder mittelbar am Tragrahmen (2) schwenkbar angelenkt ist und der zum anderen unmittelbar oder mittelbar an dem Hubelement (12) an mehreren voneinander beabstandeten Angriffspunkten (27, 29) schwenkbar angelenkt ist, und
dass der wenigstens eine Hub- und Schwenkarm (26, 28) oder wenigstens einer der Hub- und Schwenkarme (26) mit einer Verstelleinrichtung (30), vorzugsweise einer am Tragrahmen (2) gehalterten, insbesondere dort schwenkbar gelagerten Verstelleinrichtung (30), dergestalt gekoppelt ist, dass der wenigstens eine Hub- und Schwenkarm (26) oder wenigstens einer der Hub- und Schwenkarme (26, 28) bei einer Betätigung der Verstelleinrichtung (30) anhebbar oder absenkbar ist, wobei die hubplattenseitigen Angriffspunkte (27, 29) des wenigstens einen Hub- und Schwenkarms (26, 28) so zueinander beabstandet und/oder versetzt sind, dass das Hubelement (12) bei einer Schwenkverlagerung des wenigstens einen Hub- und Schwenkarms (26) oder wenigstens eines der Hub- und Schwenkarme (26, 28) anhebbar oder absenkbar sowie gleichzeitig zwangsgeführt in die entsprechende Neigung gegenüber der Horizontalebene (42) auf- bzw. abkippbar ist.

4. Transportwagen nach Anspruch 3, **dadurch gekennzeichnet, dass** der Hub- und Schwenkmechanismus (31) mehrere, insbesondere zwei separate und an wenigstens einer Hubetementseite angreifende Hub- und Schwenkarme(26, 28), vorzugsweise jeweils wenigstens zwei auf zwei gegenüberliegenden Hubelementseiten angreifende Hub- und Schwenkarme, aufweist, und
dass die vorzugsweise parallel oder windschief zueinander verlaufenden Hub- und Schwenkarme (26, 28) zum einen beabstandet voneinander an dem Hubelement (12) und zum anderen am Tragrahmen (2) schwenkbar angelenkt sind, und
dass an einem ersten Hub- und Schwenkarm (26), vorzugsweise an einem in Hochachsenrichtung gesehen oberen Hub- und Schwenkarm, die Verstelleinrichtung (30; 47) angreift, mittels der der erste Hub- und Schwenkarm (26) um eine tragrahmenbereichsseitige Schwenkachse (25) nach oben oder nach unten schwenkbar ist, wodurch das Hubelement (12) angehoben oder abgesenkt wird, und wobei ein zweiter, vorzugsweise in Hochachsenrichtung unterer Hub- und Schwenkarm (28) so versetzt zum ersten Hub- und Schwenkarm (26) an dem Hubelement (12) angebunden ist, dass das Hubelement (12) bei einer Schwenkverlagerung des ersten Hub- und Schwenkarms (26) vom zweiten Hub- und Schwenkarm (28) zwangsgeführt in die je nach Verlagerungsrichtung gegen die Horizontalebene (42) auf- oder abgekippte Position überführbar ist.

5. Transportwagen nach Anspruch 3 oder 4, **dadurch gekennzeichnet, dass** der Hub- und Schwenkmechanismus (31) wenigstens ein fest mit dem Tragrahmen (2), insbesondere mit einem in Fahrtrichtung des Transportwagens (1) verlaufenden Längsträger (3) des Tragrahmens, verbundenes Befestigungselement (22) aufweist, an dem der wenigstens eine das Hubelement (12) tragende Hub- und Schwenkarm (26, 28) schwenkbar angelenkt ist, wobei bevorzugt vorgesehen ist, dass das wenigstens eine Befestigungselement als Befestigungswinkel (22) ausgebildet ist, der bezogen auf die Hochachsenrichtung von oben her auf den Tragrahmen (2) aufgesetzt ist und/oder der den Tragrahmen (2) in einer flächigen Anlageverbindung wenigstens bereichsweise umgreift.

6. Transportwagen nach Anspruch 5, **dadurch gekennzeichnet, dass** an gegenüberliegenden Halteelementseiten jeweils ein Befestigungswinkel (22) angeordnet ist, an deren sich in Hochachsenrichtung von oben her am Tragrahmen (2) abstützendem Schenkel (23) eine Schwenkachse (25) gelagert ist, an der auf beiden Seiten des Hubelements (12) jeweils der erste Hub- und Schwenkarm (26) schwenkbar gelagert ist und an deren nach unten in den Stauraum (10) einragendem Schenkel (24) jeweils der zweite Hub- und Schwenkarm (28) schwenkbar gelagert ist, und/oder dass die Verstelleinrichtung (30; 47) einerseits am Tragrahmen (2), insbesondere an einem quer zur Fahrtrichtung verlaufenden Querträger (4, 5, 6) des Tragrahmens (2) gelagert, insbesondere schwenkbar angelenkt ist, und andererseits am ersten Hub- und Schwenkarm (26), insbesondere im Bereich dessen hubelementseitigen Angriffs- bzw. Anlenkpunktes (27), angreift bzw. schwenkbar angelenkt ist.

7. Transportwagen nach einem der Ansprüche 3 bis 6, **dadurch gekennzeichnet, dass** die Verstelleinrichtung durch eine hydraulisch oder pneumatisch betätigbare Zylinder-Kolben-Einheit (30) oder durch einen elektrisch betätigbaren Aktuator gebildet ist, die oder der je nach Arbeitsmedium oder Energiequelle mit einer oder mehreren von einer Betätigungseinrichtung der Verstelleinrichtung ausgehenden Versorgungsleitung(en) gekoppelt ist, wobei bevorzugt vorgesehen ist, dass die wenigstens eine Versorgungsleitung entlang des Tragrahmens und/oder durch die Befestigungswinkel hindurch geführt und/oder dort gehaltert. ist.

8. Transportwagen nach einem der Ansprüche 3 bis 6, **dadurch gekennzeichnet, dass** die Verstelleinrichtung durch einen Spindeltrieb (47) gebildet ist, bei dessen Betätigung wenigstens ein mit dem wenigstens einen Hub- und Schwenkarm (26) oder wenigstens einer der Hub- und Schwenkarme (26, 28) mittels wenigstens eines mit dem Spindeltrieb gekoppelten Koppelelementes (52, 53) anhebbar oder absenkbar ist.

9. Transportwagen nach einem der vorhergehenden Ansprüche, **dadurch gekennzeichnet, dass** die Hubvorrichtung (11) mit einem das Hubelement (12) in die angehobene Stellung vorspannenden Kraftspeicher (65), insbesondere einer Gasfeder oder dergleichen, gekoppelt ist, wobei bevorzugt vorgesehen ist, dass die von dem wenigstens einen Kraftspeicher (65) ausgeübte Kraft kleiner oder gleich der Gewichtskraft des Hubelementes (12) ist.

10. Transportwagen nach einem der vorhergehenden Ansprüche, **dadurch gekennzeichnet, dass** eine zur Betätigung der Hubvorrichtung (11) vorgesehene Betätigungseinrichtung (36) ebenfalls am Tragrahmen (2) und/oder der Hubvorrichtung (11) angeordnet ist, so dass der Transportwagen (1) eine unabhängig bedienbare und/oder verfahrbare und/oder bestückbare Einheit ausbildet, insbesondere eine autark und unabhängig von einer Zugmaschine bedienbare Wagen- oder Baueinheit darstellt.

11. Transportwagen nach einem der vorhergehenden Ansprüche, **dadurch gekennzeichnet, dass** die Hubvorrichtung (11) mit einer Hub- und/oder Absacksicherung (56) gekoppelt ist, mittels der ein hubelementseitiges Rastelement (57, 58) während eines Absenkens des Hubelements (12) mittels der Hubvorrichtung (11) außer Eingriff mit einem tragrahmenbereichseitigen Rastgegenelement (59) bringbar ist und mittels der das Halteelement (12) in wenigstens einer definierten angehobenen Position lösbar gehaltert ist.

12. Transportwagen nach Anspruch 11, **dadurch gekennzeichnet, dass** das tragrahmenbereichsseitige Rastgegenelement (59) mit einem Koppelelement, insbesondere mit einem federelement, gekoppelt ist, das bei einer Betätigung der Hubvorrichtung (11), insbesondere bei einer Verlagerung bzw. Verschwenkung des wenigstens einen Bedienhebels (39) oder wenigstens eines der Bedienhebel entlang eines definierten Verlagerungsweges bzw. Schwenkweges, das tragrahmenbereichseitige Rastgegenelement (59) außer Eingriff mit dem hubelementseitigen Rastelement (57, 58) bringt und hält.

13. Transportwagen nach einem der vorhergehenden Ansprüche, **dadurch gekennzeichnet, dass** die gesamte Hubvorrichtung (11) als separates Einbau- und/oder Montagemodul am Tragrahmen des Transportwagens montiert und/oder fixiert ist, wobei jeweils eine Hubvorrichtung (11) pro am Tragrahmen (2) vorgesehenem Laderaum (10) vorgesehen ist und/oderdass der Tragrahmen (2) auf einer Wagenseite wenigstens einen, quer zur Fahrtrichtung des Transportwagens (1) hin offenen Laderaum (10) aufweist oder dass der Tragrahmen (2) wenigstens einen auf gegenüberliegenden Wagenseiten liegenden und quer zur Fahrtrichtung des Transportwagens (1) hin offenen Tragrahmen (2) aufweist.

14. Verfahren zum staplerfreien Transport und Umschlag von mit Abfällen beladenen oder leeren fahrbaren Entsorgungsbehältern (21) mittels eines Transportwagens (1) nach einem oder mehreren der vorhergehenden Ansprüche, bei dem wenigstens ein mit Abfall beladener fahrbarer Entsorgungsbehälter (21) in einem reinzuhaltenden Weiß- oder Graubereich einer Werkshalle ohne Staplereinsatz in den durch Absenken eines Halteelementes (12) mittels einer Hubvorrichtung (11) des Transportwagens (1) befahrbaren Stauraum (10) des Transportwagens (1) eingefahren und/oder eingeschoben und dort mittels der Hubvorrichtung (11) angehoben wird sowie weiter mittels diesem Transportwagen (1) zu einer Hub- und Kippvorrichtung einer außerhalb der Werkshalle in einem Schwarzbereich angeordneten Entsorgungsstation verbracht wird, wo die Hub- und Kippvorrichtung den wenigstens einen auf dem Transportwagen (1) transportierten und mit wenigstens einer Aufnahme (68) für die Hub- und Kippvorrichtung der Entsorgungsstation versehenen Entsorgungsbehälter (21) an der Aufnahme (68) erfasst und entleert sowie anschließend wieder auf den Transportwagen (1) zurückstellt, und wobei anschließend der Transportwägen (1) mitsamt dem wenigstens einen entleerten Entsorgungsbehälter (21) wieder in den Weiß- oder Graubereich der Werkshalle verfahren wird, in der der wenigstens eine Entsorgungsbehälter (21) mittels der Hubvorrichtung (11) auf Boden- bzw. Fahrbahnniveau abgesenkt und staplerfrei aus dem Stauraum (10) des Transportwagens (1) ausgefahren wird.

15. Verfahren nach Anspruch 14, **dadurch gekennzeichnet, dass** das wenigstens eine Hubelement (12), insbesondere die wenigstens eine Hubplatte, des Transportwagens (1) zum Beladen mit dem wenigstens einen Entsorgungsbehälter (21) in die in Anspruch 1 beanspruchte abgekippte Position überführt wird, und dass das wenigstens eine Hubelement (12), insbesondere die wenigstens eine Halteplatte, des Transportwagens (1) zum Transport des wenigstens einen Entsorgungsbehälters (21) in die in Anspruch 1 beanspruchte aufgeschwenkte Position überführt wird.

## Claims

1. Transport vehicle for transporting moveable containers (21), with a supporting frame (2) which has, on at least one side, at least one container storage space (10) which is accessible via a loading opening (9), and with at least one lifting device (11) which is arranged on the supporting frame (2) and has at least one lifting element (12) which is arranged within the storage space (10) and by means of which a container (21) can be lowered and can be raised relative to the carriageway (41), wherein the lifting device (11) has a lifting and pivoting mechanism (31) which is coupled indirectly or directly to the supporting frame (2) and to the lifting element (12) and by means of which the lifting element (12), in the lowered position, is downwardly pivoted away in the direction of the storage space (10), with forced guidance towards the horizontal plane (42) running parallel to the carriageway (41), **characterized in that** the lifting element (12), in the raised position, is upwardly pivoted by means of the lifting and pivoting mechanism (31) in the direction of the storage space (10), with forced guidance towards the horizontal plane (42) running parallel to the carriageway (41) in such a manner that a force component (F) acts upon the at least one container (21), loading the latter in a storage-space-entering direction.

2. Transport vehicle according to Claim 1, **characterized in that** the lifting element (12), in the lowered position, is downwardly pivoted or tilted by means of the lifting and pivoting mechanism (31), with forced guidance in a direction away from the storage space (10) towards the horizontal plane (42) in such a manner that a front, loading-opening-side edge region (43) of the lifting element (12) rests on the carriageway (41) and/or the lifting element (12) forms an access ramp.

3. Transport vehicle according to Claim 1 or Claim 2, **characterized in that** the lifting and pivoting mechanism (31) has at least one lifting and pivoting arm (26, 28) engaging on at least one lifting-element side, preferably in each case at least one lifting and pivoting arm engaging on two opposite lifting-element sides, which lifting and pivoting arm is firstly pivotably articulated directly or indirectly on the supporting frame (2) and which is secondly pivotably articulated directly or indirectly on the lifting element (12) at a plurality of mutually spaced-apart engagement points (27, 29), and
**in that** the at least one lifting and pivoting arm (26, 28) or at least one of the lifting and pivoting arms (26) is coupled to an adjustment device (30), preferably to an adjustment device (30) which is held on the supporting frame (2) and in particular is pivotably mounted there, in such a manner that, when the adjustment device (30) is actuated, the at least one lifting and pivoting arm (26) or at least one of the lifting and pivoting arms (26, 28) can be raised or can be lowered, wherein the lifting-plate-side engagement points (27, 29) of the at least one lifting and pivoting arm (26, 28) are spaced apart and/or offset with respect to each other in such a manner that, during shifting of the at least one lifting and pivoting arm (26) or at least one of the lifting and pivoting arms (26, 28) by pivoting, the lifting element (12) can be raised or can be lowered and at the same time, with forced guidance, can be tilted up or down into the corresponding inclination in relation to the horizontal plane (42).

4. Transport vehicle according to Claim 3, **characterized in that** the lifting and pivoting mechanism (31) has a plurality of lifting and pivoting arms (26, 28), in particular two separate lifting and pivoting arms engaging on at least one liftingelement side, preferably in each case at least two lifting and pivoting arms engaging on two opposite lifting-element sides, and
**in that** the lifting and pivoting arms (26, 28), which preferably run parallel to or askew with respect to each other, firstly are pivotably coupled at a distance from each other on the lifting element (12) and secondly on the supporting frame (2), and
**in that** the adjustment device (30; 47) engages on a first lifting and pivoting arm (26), preferably on an upper lifting and pivoting arm, as seen in the direction of the vertical axis, by means of which adjustment device the first lifting and pivoting arm (26) can be pivoted upwards or downwards about a supporting-frame-region-side pivot spindle (25), as a result of which the lifting element (12) is raised or lowered, and wherein a second lifting and pivoting arm (28), preferably a lower lifting and pivoting arm in the direction of the vertical axis, is connected to the lifting element (12) in a manner offset from the first lifting and pivoting arm (26) in such a manner that, during shifting of the first lifting and pivoting arm (26) by pivoting, the lifting element (12) can be transferred, with forced guidance, by the second lifting and pivoting arm (28) into the position tilted upwards or downwards in relation to the horizontal plane (42) depending on the shifting direction.

5. Transport vehicle according to Claim 3 or 4, **characterized in that** the lifting and pivoting mechanism (31) has at least one fastening element (22) which is fixedly connected to the supporting frame (2), in particular to a longitudinal member (3) of the supporting frame, which longitudinal member runs in the direction of travel of the transport vehicle (1), and on which the at least one lifting and pivoting arm (26, 28) supporting the lifting element (12) is pivotably articulated, wherein it is preferably provided that the at least one fastening element is designed as angle bracket (22) which is placed onto the supporting frame (2) from above, with respect to the direction of the vertical axis, and/or which engages around the supporting frame (2) at least in regions in a flat contact connection.

6. Transport vehicle according to Claim 5, **characterized in that** an angle bracket (22) is arranged in each case on opposite holding-element sides, on the limb (23) of which angle bracket, the limb being supported on the supporting frame (2) from above in the direction of the vertical axis, a pivot spindle (25) is mounted, on which pivot spindle the first lifting and pivoting arm (26) is in each case pivotably mounted on both sides of the lifting element (12), and on the limb (24) of which angle bracket, which limb projects downwards into the storage space (10), the second lifting and pivoting arm (28) is in each case pivotably mounted, and/or **in that** the adjustment device (30; 47) firstly is mounted, in particular pivotably articulated, on the supporting frame (2), in particular on a cross member (4, 5, 6) of the supporting frame (2), which cross member runs transversely with respect to the direction of travel, and secondly, engages or is pivotably articulated on the first lifting and pivoting arm (26), in particular in the region of the lifting-element-side engagement or articulation point (27) thereof.

7. Transport vehicle according to one of Claims 3 to 6, **characterized in that** the adjustment device is formed by a hydraulically or pneumatically actuable cylinder/piston unit (30) or by an electrically actuable actuator, which cylinder/piston unit or actuator is coupled, depending on working medium or energy source, to one or more supply lines emerging from an actuating device of the adjustment device, wherein it is preferably provided that the at least one supply line is guided along the supporting frame and/or through the angle brackets and/or is secured there.

8. Transport vehicle according to one of Claims 3 to 6, **characterized in that** the adjustment device is formed by a spindle drive (47), upon the actuation of which at least one can be raised or can be lowered with the at least one lifting and pivoting arm (26) or at least one of the lifting and pivoting arms (26, 28) by means of at least one coupling element (52, 53) coupled to the spindle drive.

9. Transport vehicle according to one of the preceding claims, **characterized in that** the lifting device (11) is coupled to a force accumulator (65), in particular a gas-filled spring or the like, prestressing the lifting element (12) into the raised position, wherein it is preferably provided that the force exerted by the at least one force accumulator (65) is smaller than or equal to the weight of the lifting element (12).

10. Transport vehicle according to one of the preceding claims, **characterized in that** an actuating device (36) provided for actuating the lifting device (11) is likewise arranged on the supporting frame (2) and/or on the lifting device (11) such that the transport vehicle (1) forms a unit which can be operated and/or moved and/or equipped independently, in particular a vehicle or constructional unit which can be operated autonomously or independently of a towing vehicle.

11. Transport vehicle according to one of the preceding claims, **characterized in that** the lifting device (11) is coupled to a lifting and/or sagging guard (56), by means of which, during a lowering of the lifting element (12) by means of the lifting device (11), a lifting-element-side latching element (57, 58) can be disengaged from a supporting-frame-region-side latching counter element (59) and by means of which the holding element (12) is secured releasably in at least one defined, raised position.

12. Transport vehicle according to Claim 11, **characterized in that** the supporting-frame-region-side latching counter element (59) is coupled to a coupling element, in particular to a spring element, which, when the lifting device (11) is actuated, in particular when the at least one operating lever (39) or at least one of the operating levers is shifted or pivoted along a defined shifting distance or pivoting distance, disengages the supporting-frame-region-side latching counter element (59) from the lifting-element-side latching element (57, 58) and holds said latching counter element.

13. Transport vehicle according to one of the preceding claims, **characterized in that** the entire lifting device (11) is mounted and/or fixed as a separate installation and/or mounting module on the supporting frame of the transport vehicle, wherein one lifting device (11) is in each case provided per loading space (10) provided on the supporting frame (2), and/or **in that** the supporting frame (2) has, on one vehicle side, at least one loading space (10) which is open transversely with respect to the direction of travel of the transport vehicle (1), or **in that** the supporting frame (2) has at least one supporting frame (2) which lies on opposite vehicle sides and is open transversely with respect to the direction of travel of the transport vehicle (1).

14. Method for transporting and handling moveable disposal containers (21), which are loaded with rubbish or are empty, without a forklift truck by means of a transport vehicle (1) according to one or more of the preceding claims, in which, in a white or grey area to be kept pure in a work shop, at least one moveable disposal container (21) loaded with waste is entered and/or pushed without use of a forklift truck into the storage space (10) of the transport vehicle (1), which storage space is accessible by lowering a holding element (12) by means of a lifting device (11) of the transport vehicle (1), and said disposal container is raised there by means of the lifting device (11) and is furthermore brought by means of said transport vehicle (1) to a lifting and tilting device of a disposal station arranged in a black area outside work shop where the lifting and tilting device grasps the at least one disposal container (21), which is transported on the transport vehicle (1) and is provided with at least one receptacle (68) for the lifting and tilting device of the disposal station, at the receptacle (68) and empties said disposal container and subsequently places same back again onto the transport vehicle (1), and wherein subsequently the transport vehicle (1) together with the at least one emptied disposal container (21) is moved again into the white or grey area of the work shop, in which the at least one disposal container (21) is lowered by means of the lifting device (11) onto floor or carriageway level and is removed from the storage space (10) of the transport vehicle (1) without a forklift truck.

15. Method according to Claim 14, **characterized in that** the at least one lifting element (12), in particular the at least one lifting plate, of the transport vehicle (1) is transferred into the tilted position claimed in Claim 1 for loading with the at least one disposal container (21), and **in that** the at least one lifting element (12), in particular the at least one holding plate, of the transport vehicle (1) is transferred into the upwardly pivoted position claimed in claim 1 for transporting the at least one disposal container (21).

## Revendications

1. Chariot de transport pour le transport de récipients mobiles (21), avec un cadre de support (2), qui présente sur au moins un côté au moins un espace de rangement de récipient (10) accessible par une ouverture de chargement (9), et avec au moins un dispositif de levage (11) disposé sur le cadre de support (2), qui présente au moins un élément de levage (12) disposé à l'intérieur de l'espace de rangement (10), au moyen duquel un récipient (21) peut être abaissé et soulevé par rapport à la chaussée (41), dans lequel le dispositif de levage (11) présente un mécanisme de levage et de pivotement (31) couplé directement ou indirectement au cadre de support (2) et à l'élément de levage (12), au moyen duquel l'élément de levage (12) est, dans la position abaissée, rabattu de façon guidée par rapport au plan horizontal (42) s'étendant parallèlement à la chaussée (41) dans une direction s'écartant de l'espace de rangement (10), **caractérisé en ce que** l'élément de levage (12) est relevé au moyen du mécanisme de levage et de pivotement (31), dans la position soulevée, de façon guidée par rapport au plan horizontal (42) s'étendant parallèlement à la chaussée (41), en direction de l'espace de rangement (10), de telle manière qu'une composante de force (F) agisse sur ledit au moins un récipient (21) en lui étant appliquée dans la direction d'entrée dans l'espace de rangement.

2. Chariot de transport selon la revendication 1, **caractérisé en ce que** l'élément de levage (12) est rabattu ou basculé au moyen du mécanisme de levage et de pivotement (31) dans la position abaissée, de façon guidée dans une direction s'écartant de l'espace de rangement (10), par rapport au plan horizontal (42) de telle manière qu'une région de bord avant (43), du côté de l'ouverture de chargement, de l'élément de levage (12) repose sur la chaussée (41) et/ou que l'élément de levage (12) forme une rampe d'entrée.

3. Chariot de transport selon la revendication 1 ou la revendication 2, **caractérisé en ce que** le mécanisme de levage et de pivotement (31) présente au moins un bras de levage et de pivotement (26, 28) opérant sur au moins un côté de l'élément de levage, de préférence chaque fois au moins un bras de levage et de pivotement opérant sur deux côtés opposés de l'élément de levage, qui est d'une part articulé de façon pivotante directement ou indirectement au cadre de support (2) et qui est d'autre part articulé de façon pivotante directement ou indirectement à l'élément de levage (12) en plusieurs points d'action espacés l'un de l'autre (27, 29), et **en ce que** ledit au moins un bras de levage et de pivotement (26, 28) ou au moins un des bras de levage et de pivotement (26) est couplé à un élément de déplacement (30), de préférence un élément de déplacement (30) monté sur le cadre de support (2), en particulier monté de façon pivotante sur celui-ci, de telle manière que ledit au moins un bras de levage et de pivotement (26) ou au moins un des bras de levage et de pivotement (26, 28) puisse être soulevé et abaissé lors d'un actionnement du dispositif de déplacement (30), dans lequel les points d'action (27, 29) du côté des plaques de levage dudit au moins un bras de levage et de pivotement (26, 28) sont espacés et/ou décalés l'un de l'autre de telle manière que l'élément de levage (12) puisse être soulevé ou abaissé lors d'un déplacement pivotant dudit au moins un bras de levage et de pivotement (26) ou d'au moins un des bras de levage et de pivotement (26, 28) et qu'il puisse en même temps être relevé ou rabattu de façon guidée dans l'inclinaison correspondante par rapport au plan horizontal (42).

4. Chariot de transport selon la revendication 3, **caractérisé en ce que** le mécanisme de levage et de pivotement (31) présente plusieurs, en particulier deux bras de levage et de pivotement (26, 28) séparés et opérant sur au moins un côté de l'élément de levage, de préférence respectivement au moins deux bras de levage et de pivotement opérant sur deux côtés opposés de l'élément de levage, et **en ce que** les bras de levage et de pivotement (26, 28) s'étendant de préférence de façon parallèle ou gauche l'un par rapport à l'autre sont articulés de façon pivotante d'une part à distance l'un de l'autre sur l'élément de levage (12) et d'autre part sur le cadre de support (2), et **en ce que** le dispositif de déplacement (30; 47) agit sur un bras de levage et de pivotement (26), de préférence sur le bras de levage et de pivotement supérieur, considéré dans la direction de l'axe vertical, dispositif au moyen duquel le premier bras de levage et de pivotement (26) peut pivoter vers le haut ou vers le bas autour d'un axe de pivotement (25) du côté de la région du cadre de support, l'élément de levage (12) pouvant ainsi être soulevé ou abaissé, et dans lequel un deuxième bras de levage et de pivotement (28), de préférence inférieur dans la direction de l'axe vertical, est assemblé à l'élément de levage (12) de façon décalée par rapport au premier bras de levage et de pivotement (26), de telle manière que l'élément de levage (12) puisse, lors d'un déplacement pivotant du premier bras de levage et de pivotement (26), être amené de façon guidée par le deuxième bras de levage et de pivotement (28) dans la position relevée ou basculée par rapport au plan horizontal (42) selon la direction de déplacement.

5. Chariot de transport selon la revendication 3 ou 4, **caractérisé en ce que** le mécanisme de levage et de pivotement (31) présente au moins un élément de fixation (22) attaché au cadre de support (2), en particulier à un longeron (3) du cadre de support s'étendant dans la direction de roulage du chariot de transport (1), élément sur lequel ledit au moins un bras de levage et de pivotement (26, 28) portant l'élément de levage (12) est articulé de façon pivotante, dans lequel il est de préférence prévu que ledit au moins un élément de fixation (22) soit réalisé en forme d'équerre de fixation, qui est dressée par le haut sur le cadre de support (2) par rapport à la direction d'un axe vertical et/ou qui entoure au moins localement le cadre de support (2) dans un assemblage appliqué à plat.

6. Chariot de transport selon la revendication 5, **caractérisé en ce qu'**une équerre de fixation (22) est disposée respectivement sur des côtés opposés d'un élément de maintien, sur la branche (23) de laquelle, qui s'appuie par le haut dans la direction d'un axe vertical sur le cadre de support (2), est monté un axe de pivotement (25) sur lequel le premier bras de levage et de pivotement (26) est chaque fois monté de façon pivotante de part et d'autre de l'élément de levage (12), et sur la branche (24) de laquelle, qui pénètre vers le bas dans l'espace de rangement (10), le deuxième bras de levage et de pivotement (28) est chaque fois monté de façon pivotante, et/ou **en ce que** le dispositif de déplacement (30 ; 47) est d'une part monté, en particulier articulé de façon pivotante, sur le cadre de support (2), en particulier sur une traverse (4, 5, 6) du cadre de support (2) s'étendant transversalement à la direction de roulage, et d'autre part agit ou est articulé de façon pivotante sur le premier bras de levage et de pivotement (26), en particulier dans la région de son point d'action ou d'articulation (27) du côté de l'élément de levage.

7. Chariot de transport selon l'une quelconque de revendications 3 à 6, **caractérisé en ce que** le dispositif de déplacement est formé par une unité à piston-cylindre (30) actionnable par voie hydraulique ou pneumatique ou par un actionneur actionnable par voie électrique, qui est couplé, selon le fluide de travail ou la source d'énergie, à une ou plusieurs conduite(s) d'alimentation partant d'un dispositif d'actionnement du dispositif de déplacement, dans lequel il est de préférence prévu que ladite au moins une conduite d'alimentation soit menée et/ou y soit attachée le long du cadre de support et/ou à travers l'équerre de fixation.

8. Chariot de transport selon l'une quelconque des revendications 3 à 6, **caractérisé en ce que** le dispositif de déplacement est formé par un entraînement à broche (47), dont l'actionnement permet de soulever ou d'abaisser au moins un au moyen de l'au moins un bras de levage et de pivotement (26) ou au moins un des bras de levage et de pivotement (26, 28) au moyen d'un élément de couplage (52, 53) couplé à l'entraînement à broche.

9. Chariot de transport selon l'une quelconque des revendications précédentes, **caractérisé en ce que** le dispositif de levage (11) est couplé à un accumulateur d'énergie (65), en particulier un amortisseur pneumatique ou analogue, qui précontraint l'élément de levage (12) dans la position soulevée, dans lequel il est de préférence prévu que la force exercée par ledit au moins un accumulateur d'énergie (65) soit inférieure ou égale à la force pondérale de l'élément de levage (12).

10. Chariot de transport selon l'une quelconque des revendications précédentes, **caractérisé en ce qu'**un dispositif d'actionnement (36) prévu pour l'actionnement du dispositif de levage (11) est également disposé sur le cadre de support (2) et/ou sur le dispositif de levage (11), de telle manière que le chariot de transport (1) forme une unité pouvant être conduite et/ou déplacée et/ou chargée de façon indépendante, en particulier représente une unité de chariot ou de construction autonome et pouvant être conduite indépendamment d'un engin de traction.

11. Chariot de transport selon l'une quelconque des revendications précédentes, **caractérisé en ce que** le dispositif de levage (11) est couplé à une sécurité de levage et/ou de descente (56), au moyen de laquelle un élément d'encliquetage (57, 58) du côté de l'élément de levage peut être mis, pendant un abaissement de l'élément de levage (12) au moyen du dispositif de levage (11), hors de prise avec un élément d'encliquetage opposé (59) du côté de la région du cadre de support, et au moyen de laquelle l'élément de maintien (12) peut être maintenu de façon amovible dans au moins une position soulevée définie.

12. Chariot de transport selon la revendication 11, **caractérisé en ce que** l'élément d'encliquetage opposé (59) du côté de la région du cadre de support est couplé à un élément de couplage, en particulier à un élément de ressort, qui met et maintient l'élément d'encliquetage opposé (59) du côté de la région du cadre de support hors de prise avec l'élément d'encliquetage (57, 58) du côté de l'élément de levage lors d'un actionnement du dispositif de levage (11), en particulier lors d'un déplacement ou d'un pivotement dudit au moins un levier de commande (39) ou d'au moins un des leviers de commande le long d'un chemin de déplacement ou d'un chemin de pivotement défini.

13. Chariot de transport selon l'une quelconque des revendications précédentes, **caractérisé en ce que** tout le dispositif de levage (11) est monté et/ou fixé comme module de construction et/ou de montage sur le cadre de support du chariot de transport, dans lequel il est chaque fois prévu un dispositif de levage (11) par espace de chargement (10) prévu sur le cadre de support (2) et/ou **en ce que** le cadre de support (2) présente sur un côté du chariot au moins un espace de chargement (10) ouvert transversalement à la direction de roulage du chariot de transport (1) ou **en ce que** le cadre de support (2) présente au moins un cadre de support (2) situé sur des côtés opposés du chariot et transversalement à la direction de roulage du chariot de transport (1).

14. Procédé pour le transport sans chariot élévateur de récipients d'évacuation mobiles chargés de déchets ou vides (21) au moyen d'un chariot de transport (1) selon une ou plusieurs des revendications précédentes, dans lequel au moins un récipient d'évacuation mobile chargé de déchets (21) est introduit et/ou inséré dans l'espace de rangement (10) du chariot de transport (1) accessible par abaissement d'un élément de retenue (12) au moyen d'un dispositif de levage (11) du chariot de transport (1) dans une zone blanche ou grise à garder propre d'une salle de travail sans utilisation d'un chariot élévateur et il y est soulevé au moyen du dispositif de levage (11) et il est ensuite transféré au moyen de ce chariot de transport (1) vers un dispositif de levage et de basculement d'une station d'évacuation agencée dans une zone noire à l'extérieur de la salle de travail, où le dispositif de levage et de basculement saisit au logement (68) et vide ledit au moins un récipient d'évacuation (21) transporté sur le chariot de transport (1) et équipé d'au moins un logement (68) pour le dispositif de levage et de basculement de la station d'évacuation puis il le replace de nouveau sur le chariot de transport (1), et dans lequel le chariot de transport (1) avec ledit récipient d'évacuation (21) vidé est de nouveau déplacé dans la zone blanche ou grise de la salle de travail, dans laquelle ledit au moins un récipient d'évacuation (21) est abaissé au niveau du sol ou de la chaussée au moyen du dispositif de levage (11) et il est retiré hors de l'espace de rangement (10) du chariot de transport (1) sans chariot élévateur.

15. Procédé selon la revendication 14, **caractérisé en ce que** ledit au moins un élément de levage (12), en particulier ladite au moins une plaque de levage, du chariot de transport (1) est amené dans la position basculée revendiquée dans la revendication 1 pour son chargement avec ledit au moins un récipient d'évacuation (21), et **en ce que** ledit au moins un élément de levage (12), en particulier ladite au moins une plaque de retenue, du chariot de transport (1) est amené dans la position relevée revendiquée dans la revendication 1 pour le transport dudit au moins un récipient d'évacuation (21).
